# EUROPÄISCHE PATENTSCHRIFT

(11) **EP 3 197 735 B1**
(45) Veröffentlichungstag und Bekanntmachung des Hinweises auf die Patenterteilung: **21.11.2018**
(21) Anmeldenummer: 15794059.4
(22) Anmeldetag: 14.09.2015
(51) Int. Cl.: B60T 13/66, B60T 13/68

(54) **ELEKTRISCHE AUSRÜSTUNG EINES FAHRZEUGS MIT EINER WENIGSTENS TEILWEISE ELEKTRISCHEN BREMS- UND LENKEINRICHTUNG MIT HOHER VERFÜGBARKEIT**
ELECTRIC EQUIPMENT OF A VEHICLE, COMPRISING AN AT LEAST PARTLY ELECTRIC BRAKING AND STEERING DEVICE WITH HIGH-AVAILABILITY
ÉQUIPEMENT ÉLECTRIQUE D'UN VÉHICULE, PRÉSENTANT UN DISPOSITIF DE FREINAGE ET DE DIRECTION AU MOINS PARTIELLEMENT ÉLECTRIQUE, DOTÉ D'UNE DISPONIBILITÉ ÉLEVÉE

(30) Priorität: 22.09.2014 DE 102014013756
(43) Veröffentlichungstag der Anmeldung: 02.08.2017
(73) Patentinhaber: KNORR-BREMSE Systeme für Nutzfahrzeuge GmbH, 80809 München (DE)
(72) Erfinder: HECKER, Falk, 71706 Markgröningen (DE); HERGES, Michael, 80935 München (DE); SCHWAB, Frank, 75249 Kieselbronn (DE)
(86) Internationale Anmeldenummer: PCT/DE2015/000444
(87) Internationale Veröffentlichungsnummer: WO 2016/045652

(56) Entgegenhaltungen:
- EP-A1- 0 482 374
- EP-A1- 2 570 312
- EP-A1- 2 570 317
- DE-A1-102008 014 459
- US-A1- 2007 170 774
- US-A1- 2007 228 814

## Beschreibung

Die Erfindung betrifft eine elektrische Ausrüstung eines Fahrzeugs mit einer wenigstens teilweise elektrischen Brems- und Lenkeinrichtung beinhaltend eine elektrische oder elektro-mechanische Lenkeinrichtung mit oder ohne durchgehende mechanische Verbindung zwischen einem Lenkrad und einem Lenkgetriebe sowie mit einer elektronischen Lenksteuereinrichtung und einem elektrischen Lenksteller, sowie eine Betriebsbremseinrichtung gemäß dem Oberbegriff von Anspruch 1.

Eine kombinierte und wenigstens teilweise elektrische Brems- und Lenkeinrichtung eines Fahrzeugs ist aus der gattungsbildenden EP 0 999 117 A2 bekannt. Dabei ist vorgesehen, dass im Fehlerfall einer Lenksystemkomponente, insbesondere eines Lenkstellers, gezielt einzelne Räder zur Aufrechterhaltung der Lenkbarkeit des Fahrzeugs eingebremst werden. Dadurch wird die Fehlertoleranz bei einem Ausfall einer Lenksystemkomponente dadurch verbessert, dass versucht wird, die ausgefallene Lenkwirkung der betreffenden Lenksystemkomponente durch Erzeugung eines Giermoments mittels gezielten Bremsens einzelner Räder wenigstens teilweise zu ersetzen. Um die Ausfallsicherheit zu erhöhen, ist die Stromversorgung der kombinierten Brems- und Lenkeinrichtung in Form einer weiteren Fahrzeugbatterie redundant. Weiterhin verfügen auch Radmodule, in welchen Brems- und Lenkaktuatoren untergebracht sind, über jeweils einen eigenen Energiespeicher. Dabei sind die elektronische Lenk- und Bremssteuerung sowie die Energieversorgung vollständig redundant ausgelegt, d.h. alle elektronischen Systemkomponenten sowie die Energieversorgung sind jeweils mindestens doppelt vorhanden. Dadurch kann bei Ausfall einer elektronischen Systemkomponente bzw. Energieversorgung die jeweils noch intakte Systemkomponente bzw. Energieversorgung die angeforderte Funktion vollständig übernehmen. Ein Nachteil dieser Systemauslegung besteht in der relativ aufwändigen Installation und den hohen Komponenten- und Systemkosten. Dadurch sind derartige Konzepte nur bedingt serientauglich. Außerdem muss dabei sichergestellt werden, dass keine Fehler in den redundanten Systemen gleichzeitig auftreten. Die Lenk- und Bremseingaben für die elektrische Brems- und Lenkeinrichtung werden außerdem durch den Fahrer erzeugt.

Andererseits existieren zum Teil seit geraumer Zeit Fahrerassistenzsysteme wie Antriebsschlupfregelung (ASR), Notbremsassistent (AEBS), Abstandsfolgereglung (ACC) oder Fahrdynamikregelung (ESP), mit deren Hilfe Lenk- und/oder Bremseingriffe automatisch und unabhängig vom Fahrer erfolgen können, um Sicherheitsvorgaben wie z.B. einen gewissen Mindestabstand zu einem voraus fahrenden Fahrzeug, eine gewisse Mindestbremswirkung sowie eine gewisse Mindestfahrstabilität zu gewährleisten.

Für den zukünftigen Fahrzeugverkehr sind außerdem Konzepte geplant, die es ermöglichen, Fahrzeuge im öffentlichen Straßenverkehr auch völlig ohne Fahrereingriff im Sinne eines "Autopiloten" zu bewegen. Dabei sollen mehrere Fahrzeuge automatisch gesteuert mit einem Abstand hintereinander fahren, der geringer als ein eigentlich vorgeschriebener Sicherheitsabstand ist (Platooning). Dies ist nur möglich, wenn durch geeignete Kommunikation zwischen den Fahrzeugen alle gleichzeitig und mit gleicher Verzögerung bremsen können.

Im Rahmen von solchen (teil-)autonomen Fahrzeugkonzepten ist es daher nötig, dass die elektrische Brems- und Lenkeinrichtung Brems- und Lenkanforderungen auf elektronischem Wege erhalten und umsetzen kann und zwar auch dann, wenn ein Fehler innerhalb der elektronischen Steuerungen oder Elektrik vorliegt. Daher wird eine fehlertolerante Steuerung der Brems- und Lenkeinrichtung benötigt, so dass beim Auftreten von Fehlern im Bremssystem die Kernfunktionen Lenken und Bremsen auch ohne Fahrer(eingriff) mindestens über eine gewisse Zeit sichergestellt werden kann bis ein sicherer Systemzustand erreicht ist, beispielsweise zumindest ein Stillstand des Fahrzeugs oder ein geparkter Zustand mit dauerhaft zugespannten Bremsen.

Bei bis zum Zeitpunkt dieser Patentanmeldung in Serie gebauten, elektronischen oder elektronisch bremsdruckgeregelten Bremssystemen (EBS) schaltet deren elektronische Steuereinrichtung beim Auftreten eines Fehlers in dem elektrischen Betriebsbremskreis (z.B. Ausfall der elektrischen Energiequelle oder der elektronischen Steuereinrichtung selbst) ab und auf eine rein pneumatische Backup-Steuerung durch den wenigstens einen pneumatischen Betriebsbremskreis um, mit der allerdings lediglich der Fahrer das Fahrzeug durch eine Betätigung des Betriebsbremsbetätigungsorgans einbremsen kann. Ein solches System ist für ein oben beschriebenes (teil-)autonomes oder automatisiertes Fahren (Autopilot) nicht geeignet, da bei Auftreten eines solchen Fehlers keine automatisiert gesteuerten Lenk- und Bremseingriffe mehr möglich sind.

Die bisher unveröffentlichte deutsche Patentanmeldung mit dem Aktenzeichen DE 102014112014.0 desselben Patentanmelders behandelt den Fall, dass eine pneumatische oder elektro-pneumatische Betriebsbremseinrichtung nicht nur durch eine Fahrerbremsanforderung, sondern auch automatisch durch ein Fahrerassistenzsystem wie beispielsweise einen Notbremsassistenten oder eine Abstandsfolgeregelung (ACC) betätigt werden kann. Dabei wird ein(e) gegenüber dem Stand der Technik erweiterte Betriebsbremsventileinrichtung oder erweitertes Fußbremsmodul mit wenigstens einem pneumatischen Kanal eingesetzt, bei dem ein Steuerkolben nicht nur durch eine erste, durch Betätigung des Fußbremspedals erzeugten Betätigungskraft belastet werden kann, sondern zusätzlich auch durch eine zweite Betätigungskraft, welche abhängig von Fahrbetriebsbedingungen auf elektronischem Wege erzeugt wird. Insbesondere ist die erweiterte Betriebsbremsventileinrichtung mit einer elektronischen Drucksteuer- oder Regeleinrichtung versehen, mit welcher unabhängig vom Fahrer der in dem wenigstens einen pneumatischen Kanal erzeugte Brems- oder Bremssteuerdruck mittels der am Steuerkolben wirkenden zweiten Betätigungskraft erhöht oder reduziert werden kann.

Bei einem aus DE 10 2014 107 399 A1 bekannten Bremssystem ist die elektronische Bremsansteuerung zwei- oder mehrkreisig ausgelegt in dem Sinne, dass jeder Bremskreis nur bestimmte Achsen oder Räder bedient. Bei Ausfall einer der Bremskreise ist somit nur noch ein Teil der möglichen Bremswirkung auf elektronischem Wege erzeugbar. Würde ein Bremskreis beispielsweise während einer starken Bremsung eines oben beschriebenen, automatisch gesteuerten Fahrzeugkolonne (Platooning) auftreten, wäre ein Auffahrunfall unvermeidlich. Eine gattungsgemäß elektrische Ausrüstung ist aus US 2007/228814 A1 bekannt.

Hiervon ausgehend besteht die Aufgabe der Erfindung darin, eine eingangs beschriebene wenigstens teilweise elektrische Brems- und Lenkeinrichtung derart weiter zu bilden, dass sie bei einer Ansteuerung ohne Zutun des Fahrers beispielsweise durch ein Fahrerassistenzsystem oder durch eine Autopiloteinrichtung eine möglichst hohe Ausfallsicherheit aufweist sowie eine möglichst hohe Bremswirkung gewährleistet. Diese Aufgabe wird durch die Merkmale von Patentanspruch 1 gelöst.

### Offenbarung der Erfindung

Die Erfindung geht davon aus, dass als Betriebsbremseinrichtung eine elektropneumatische Betriebsbremseinrichtung, insbesondere ein elektronisches oder elektronisch bremsdruckgeregeltes Bremssystem (EBS) vorgesehen wird, welches eine elektropneumatische Betriebsbremsventileinrichtung, eine elektronische Bremssteuereinrichtung, elektropneumatische Modulatoren sowie pneumatische Radbremsaktuatoren beinhaltet, wobei die elektronische Bremssteuereinrichtung die elektropneumatischen Modulatoren elektrisch steuert, um pneumatische Bremsdrücke oder Bremssteuerdrücke für die pneumatischen Radbremsaktuatoren radindividuell, achsindividuell oder seitenindividuell zu erzeugen. Erfindungsgemäß weist die elektropneumatische Betriebsbremsventileinrichtung ein Betriebsbremsbetätigungsorgan sowie innerhalb wenigstens eines elektrischen Betriebsbremskreises wenigstens einen elektrischen Kanal mit wenigstens einem vom Betriebsbremsbetätigungsorgan betätigbaren elektrischen Bremswertgeber zum von einer Betätigung des Betriebsbremsbetätigungsorgans abhängigen Aussteuern von Betätigungssignalen auf, sowie wenigstens eine die Betätigungssignale empfangende elektronische Auswerteeinrichtung, welche abhängig von den Betätigungssignalen Bremsanforderungssignale in die elektronische Bremssteuereinrichtung einsteuert, sowie innerhalb wenigstens eines pneumatischen Betriebsbremskreises wenigstens einen pneumatischen Kanal, bei welchem durch Betätigung des Betriebsbremsbetätigungsorgans aufgrund einer Fahrerbremsanforderung wenigstens ein Steuerkolben der Betriebsbremsventileinrichtung mit einer ersten Betätigungskraft belastet wird und der Steuerkolben wenigstens ein einen Einlasssitz und einen Auslasssitz beinhaltendes Doppelsitzventil der Betriebsbremsventileinrichtung direkt oder indirekt steuert, um pneumatische Bremsdrücke oder Bremssteuerdrücke für die pneumatischen Radbremsaktuatoren zu erzeugen, und wobei die elektronische Auswerteeinrichtung der elektropneumatischen Betriebsbremsventileinrichtung beinhaltende Mittel zum Erzeugen einer zweiten Betätigungskraft unabhängig von einer Fahrerbremsanforderung vorgesehen sind, welche bei Vorliegen einer vom Fahrerwunsch unabhängigen Bremsanforderung in Bezug zur ersten Betätigungskraft parallel und gleichsinnig oder gegensinnig auf den wenigstens einen Steuerkolben wirkt, und wobei die elektropneumatische Betriebsbremseinrichtung von einer ersten elektrischen Energiequelle oder von einem ersten Energieversorgungskreis mit elektrischer Energie versorgt ist, welche unabhängig von einer zweiten elektrischen Energiequelle oder von einem zweiten Energieversorgungskreis ist, welche oder welcher die elektropneumatische Betriebsbremsventileinrichtung mit elektrischer Energie versorgt, wobei die elektrische oder elektro-mechanische Lenkeinrichtung von der zweiten elektrischen Energiequelle oder vom dem zweiten Energieversorgungskreis mit elektrischer Energie versorgt ist.

Generell benötigt ein zum autonomen oder automatisierten Fahren geeignetes Fahrzeug zumindest eine elektrisch beeinflussbare Lenkeinrichtung, beispielsweise in Form von Steer-by-Wire ohne durchgehende mechanische Verbindung zwischen Lenkrad und Lenkgetriebe oder in Form einer Überlagerungslenkung, bei welcher eine durchgehende mechanische Verbindung zwischen Lenkrad und Lenkgetriebe zwar vorhanden, aber eine Überlagerung des mittels dieser mechanischen Verbindung vom Fahrer erzeugten Lenkmoments durch ein von einem elektrischen Lenksteller erzeugtes Lenkmoment stattfindet (Lenkmomentüberlagerung). Bei elektrischen Überlagerungslenkungen wird bei schweren Nutzfahrzeugen meist noch eine konventionelle, hydraulische Servolenkung nachgeschaltet, die die Vorgaben des Fahrers und der Überlagerungslenkungen verstärken, um so die hohen Lenkkräfte aufbringen zu können. Die für die Erfindung verwendete elektrische oder elektro-mechanische Lenkeinrichtung ist derart ausgebildet. Weiterhin ist auch eine elektrisch beeinflussbare Bremseinrichtung notwendig. Eine für die Erfindung verwendete elektropneumatische Betriebsbremseinrichtung mit ESP-Funktion, insbesondere ein elektronisches oder elektronisch bremsdruckgeregeltes Bremssystem (EBS) mit ESP-Funktion erfüllt diese Anforderung.

Das Grundprinzip "Lenken durch Bremsen" ist hinlänglich bekannt und wird beispielsweise in der bereits oben erwähnten EP 0 999 117 A2 beschrieben. Es wird dabei die Tatsache ausgenutzt, dass ein Fahrzeug auch durch Einbremsen einzelner Räder oder Radgruppen gelenkt werden kann. Somit kann also eine geeignet ausgebildete Betriebsbremseinrichtung als Redundanz für die Lenkeinrichtung zumindest für einen begrenzten Zeitraum dienen.

Eine geeignete Betriebsbremseinrichtung stellt eine elektro-pneumatische Betriebsbremseinrichtung dar, wie sie für die Erfindung verwendet wird und welche in der Lage ist, ohne Zutun des Fahrers rad- oder radgruppenindividuell Bremsdruck in pneumatischen Radbremsaktuatoren einzusteuern. Dabei handelt es sich um elektro-pneumatische Betriebsbremseinrichtungen, die eine Fahrstabilisierungsfunktion wie ESP (Elektronisches Stabilitätsprogramm) oder ABS (Antiblockiersystem) in Kombination mit ASR-Ventilen (Antriebsschlupfregelung) an Vorder- und Hinterachse ausführen können.

Um "Lenken" und "Bremsen" automatisiert, d.h. aufgrund einer vom Fahrer abweichenden Autorität (Autopiloteinrichtung) auch bei einem Fehler in der elektrischen Energieversorgung zu gewährleisten, sind bei einem Fahrzeug mit der erfindungsgemäßen Ausstattung wenigstens zwei Energieversorgungskreise notwendig, die so gestaltet sind, dass bei einem Fehler in einem der Kreise noch genügend elektrische Energie vorhanden ist, um die kombinierte Lenk- und Bremseinrichtung weiterhin betreiben zu können. Unter einer Autopiloteinrichtung soll im Folgenden eine Einrichtung verstanden werden, welche wenigstens die Lenk- und Bremseinrichtung des Fahrzeugs ohne Zutun des Fahrers steuert oder regelt, insbesondere in Abhängigkeit von Fahrbetriebsbedingungen. Dasselbe gilt auch für eine Fahrdynamikregelung wie z.B. Abstandsfolgeregelung (ACC, Adaptive Cruise Control), durch welche der Abstand bzw. die Relativgeschwindigkeit zu einem vorausfahrenden Fahrzeug konstant gehalten wird, Notbremsassistent (AEBS) oder Fahrdynamikregelung (ESP), mit deren Hilfe Lenk- und/oder Bremseingriffe automatisch und unabhängig vom Fahrer erfolgen können, um Sicherheitsvorgaben wie z.B. einen gewissen Mindestabstand zu einem voraus fahrenden Fahrzeug, eine gewisse Mindestbremswirkung sowie eine gewisse Mindestfahrstabilität zu gewährleisten.

Als Redundanz für die ausgefallene elektrische oder elektro-mechanische Lenkeinrichtung dient bei der Erfindung eine elektro-pneumatische Betriebsbremseinrichtung, insbesondere mit ESP-Funktion. Hierfür eignen sich verschiedene Varianten von elektro-pneumatischen Betriebsbremseinrichtungen.

Gemäß einer ersten Variante der elektro-pneumatischen Betriebsbremseinrichtung wird der Bremsdruck in pneumatischen Radbremsaktuatoren des Fahrzeugs und gegebenenfalls in pneumatischen Radbremsaktuatoren eines Anhängers des Fahrzeugs nur bei einem Fehler im elektrischen Betriebsbremskreis und bei Bremspedalbetätigung durch den Fahrer rein pneumatisch gesteuert bzw. geregelt, ansonsten stets elektrisch. Dies ist bei einem elektronisch bremsdruckgeregelten EBS-System der Fall, welches stets mit einer ESP-Funktion ausgestattet ist.

Gemäß einer zweiten Variante der elektro-pneumatischen Betriebsbremseinrichtung wird der Bremsdruck in pneumatischen Radbremsaktuatoren des Fahrzeugs und gegebenenfalls in pneumatischen Radbremsaktuatoren eines Anhängers des Fahrzeugs im Normalfall oder im unkritischen Betriebsfall durch Bremspedalbetätigung rein pneumatisch gesteuert. Der elektrische Teil der elektro-pneumatischen Bremseinrichtung besteht dann in wenigstens einer zusätzlichen Fahrdynamikregelung, welche nur bei Eintritt kritischer Situationen wie z.B. Bremsblockieren, Schleudern, Gieren, Übersteuern, Untersteuern durch Brems- oder Lenkbremseingriff elektrisch eingreift, z.B. in Form von ESP oder ABS mit ASR-Ventilen an allen Achsen.

Für den Fall, dass die elektro-pneumatische Betriebsbremseinrichtung über eine ESP-Funktion verfügt, sind bereits ein Lenkradwinkelsensor, ein Gierratensensor sowie ein Querbeschleunigungssensor vorhanden, mit denen die Auswirkung eines Lenkbremseingriffs gemessen und überwacht werden kann. Der Lenkradwinkelsensor kann außerdem auch zur Sensierung des Fahrer-Lenkwunsches genutzt werden, um dann, wenn der Fahrer selbst steuert, durch Lenkbremsungen eine Redundanz für eine Servolenkung oder den Lenkaktuator einer Steer-By-Wire-Lenkeinrichtung zu bilden. Somit kann im Falle einer Überlagerungslenkung mit nachgeschalteter hydraulischer Servolenkung die Lenkbremsung unterstützend eingesetzt werden, wenn die hydraulische Servolenkung versagt.

Alternativ oder zusätzlich ist vorzugsweise eine Sensorik vorhanden, z.B. ein Sensor zur Erfassung des Lenkwinkels der gelenkten Räder zum Erfassen der Lenkwirkung und/oder ein Lenkmomentsensor in der Lenksäule zur Erfassung des durch den Fahrer erzeugten Lenkmoments.

Um eine hohe Ausfallsicherheit der elektrischen oder elektro-mechanischen Lenkeinrichtung im Hinblick auf deren automatische Ansteuerung ohne Zutun des Fahrers durch die Autopiloteinrichtung oder das Fahrerassistenzsystem zu gewährleisten, wird die elektropneumatische Betriebsbremseinrichtung von einer ersten elektrischen Energiequelle oder einem ersten Energieversorgungskreis mit elektrischer Energie versorgt, welche unabhängig von einer zweiten elektrischen Energiequelle oder von einem zweiten Energieversorgungskreis ist, welche die elektrische oder elektro-mechanische Lenkeinrichtung mit elektrischer Energie versorgt.

Dabei werden die automatisiert und ohne Zutun des Fahrers erzeugten Lenkanforderungen der Autopiloteinrichtung bzw. des Fahrerassistenzsystems nicht nur in die Lenkeinrichtung, sondern auch in die elektro-pneumatische Bremseinrichtung eingesteuert, bzw. von der elektro-pneumatischen Bremseinrichtung "mitgelesen".

Wenn dann ein Fehler in dem zweiten elektrischen Energieversorgungskreis oder in der zweiten elektrischen Energiequelle auftritt, welcher oder welche die Lenkeinrichtung versorgt oder bei einem Fehler in der Lenkeinrichtung selbst, erkennt dies die die elektronische Bremssteuereinrichtung der elektropneumatischen Betriebsbremseinrichtung, z.B. durch Fehlen der Botschaften der Lenkeinrichtung z.B. auf einem Datenbus, an welchen beiden Einrichtungen angeschlossen sind, oder durch eine explizite Fehlernachricht der Lenkeinrichtung. Es ist auch möglich, dass die Lenkeinrichtung von einem anderen Steuergerät überwacht wird und der elektro-pneumatischen Betriebsbremseinrichtung bzw. deren elektronischer Bremssteuereinrichtung dann von diesem Steuergerät der Fehler mitgeteilt wird. In allen diesen Fällen setzt dann die elektro-pneumatische Betriebsbremseinrichtung die Lenkvorgaben oder die Lenkanforderung der Autopiloteinrichtung bzw. des Fahrerassistenzsystems um.

Es ist auch möglich, dass ein anderes Steuergerät den Ausfall der Lenkeinrichtung oder deren Energieversorgung erkennt, die für die Lenkbremsung nötigen Bremsdrücke berechnet und als rad- oder radgruppenindividuelle Bremsdruckvorgaben an die elektro-pneumatische Betriebsbremseinrichtung sendet, welche diese dann umsetzt. Dieses andere Steuergerät kann auch Bestandteil der Autopiloteinrichtung sein.

Weiterhin muss sichergestellt werden, dass die von der Autopiloteinrichtung erzeugten Bremsanforderungen auch im Falle eines Fehlers in der elektrischen Energieversorgung oder im elektrischen Betriebsbremskreis der elektropneumatische Betriebsbremseinrichtung weiterhin funktionsfähig bleibt.

Die Erfindung schlägt hierzu vor, die in einer elektro-pneumatischen Betriebsbremseinrichtung stets vorhandene pneumatische oder elektropneumatische Betriebsbremsventileinrichtung oder das dort ohnehin vorhandene Fußbremsmodul so zu modifizieren, dass sie oder es zum einen eine Sensierung der Bremspedalstellung ermöglicht und zum anderen den von wenigstens einem pneumatischen Kanal der Betriebsbremsventileinrichtung ausgesteuerten Bremsdruck unabhängig von einer Bremspedalbetätigung modifizieren kann.

Eine solche dann "aktive" pneumatische oder elektro-pneumatische Betriebsbremsventileinrichtung oder ein solches "aktives" Fußbremsmodul als Synonym ist in oben erwähnten und bisher unveröffentlichten deutschen Patentanmeldung mit dem Aktenzeichen DE 10 2014 112 014.0 des Anmelders offenbart, wobei deren diesbezüglicher Offenbarungsgehalt in die hier vorliegende Patentanmeldung vollständig aufgenommen wird.

Der pneumatische Teil dieses "aktiven" Fußbremsmoduls funktioniert wie ein Betriebsbremsventil einer pneumatischen Betriebsbremseinrichtung und erzeugt auf eine Bremspedalbetätigung hin ein- oder mehrkreisig pneumatische Bremsdrücke oder Bremssteuerdrücke in wenigstens einen pneumatischen Betriebsbremskreis der elektro-pneumatischen Betriebsbremseinrichtung ein. Zumindest, wenn die elektro-pneumatische Betriebsbremseinrichtung ein elektronisch geregeltes oder bremsdruckgeregeltes Bremssystem (EBS) ist, besitzt das aktive Fußbremsmodul eine Sensorik zur Sensierung der Fahrerbremsanforderung in Form eines elektrischen Bremswertgebers. Diese Sensorik ist Bestandteil des elektrischen Kanals des "aktiven" Fußbremsmoduls oder des elektrischen Betriebsbremskreises der elektro-pneumatischen Betriebsbremseinrichtung und übermittelt ihr im fehlerfreien Betrieb die Betriebsbremsanforderung des Fahrers, welche dieser über das Betriebsbremspedal eingibt.

Damit auch im Falle eines Fehlers im elektrischen Kanal der Betriebsbremsventileinrichtung oder im elektrischen Betriebsbremskreis der elektro-pneumatischen Betriebsbremseinrichtung die Bremsanforderung des Fahrers umgesetzt wird, werden bei einem elektronisch geregelten Bremssystem (EBS) die in den wenigstens einen pneumatischen Betriebsbremskreis eingesteuerten Bremsdrücke oder Bremssteuerdrücke als Backup verwendet.

Das "aktive" Fußbremsmodul besitzt außerdem den elektrischen Kanal sowie eine elektronische Drucksteuer- oder Druckregeleinrichtung, mit der es in wenigstens einem pneumatischen Betriebsbremskreis Bremsdrücke oder Bremssteuerdrücke modifizieren, insbesondere erhöhen oder ohne Zutun des Fahrers erzeugen kann. Es ist somit unabhängig vom Funktionieren einer elektrischen Bremsdruckregelung der elektro-pneumatischen Betriebsbremseinrichtung (EBS) in der Lage, Bremsanforderungen eines Fahrerassistenzsystems oder einer Autopiloteinrichtung umsetzen.

Es ist aber nicht notwendig, dass die Redundanz des elektrischen Betriebsbremskreises der elektro-pneumatischen Betriebsbremseinrichtung in Form des "aktiven" Fußbremsmoduls Bremsdrücke rad- oder radgruppenindividuell steuert oder regelt. Denn die Wahrscheinlichkeit, dass mehrere Fehler gleichzeitig auftreten, nämlich einerseits ein Fehler in der Lenkeinrichtung und andererseits ein Fehler in der Betriebsbremseinrichtung ist sehr gering. Auch ist es nicht erforderlich, dass nur in Ausnahmefällen benötigte Funktionen wie ABS, ASR oder ESP im Fehlerfall noch ausgeführt werden können. Sonstige, nicht sicherheitsrelevante Funktionen, wie z.B. Belagverschleißregelung oder Ähnliches sind in dieser Situation auch nicht erforderlich.

Um nun die Ausführung der von der Autopiloteinrichtung oder von dem Fahrerassistenzsystem erzeugten Bremsanforderung insgesamt ausfallsicher zu gestalten, wird die elektro-pneumatische Betriebsbremseinrichtung von dem ersten elektrischen Energieversorgungskreis oder der ersten elektrischen Energiequelle versorgt, das "aktive" Fußbremsmodul hingegen von dem zweiten elektrischen Energieversorgungskreis oder der zweiten elektrischen Energiequelle.

Die Bremsanforderungssignale der Autopiloteinrichtung werden insbesondere nicht nur in die elektro-pneumatische Betriebsbremseinrichtung, sondern auch in das "aktive" Fußbremsmodul eingesteuert bzw. vom "aktiven" Fußbremsmodul z.B. auf einem Datenbus, an welchen beide Einrichtungen angeschlossen sind, "mitgelesen".

Wenn nun ein Ausfall oder ein Fehler in dem ersten elektrischen Energieversorgungskreis oder in der ersten elektrischen Energiequelle oder auch im elektrischen Betriebsbremskreis der elektro-pneumatischen Betriebsbremseinrichtung auftritt, erkennt dies das aktive FBM, z.B. durch Fehlen der Botschaften der elektro-pneumatischen Betriebsbremseinrichtung auf dem Datenbus oder durch eine explizite Fehlernachricht der elektro-pneumatischen Betriebsbremseinrichtung. Es ist auch möglich, dass die elektro-pneumatische Betriebsbremseinrichtung von einem anderen Steuergerät überwacht wird und dann dem "aktiven" Fußbremsmodul eine Fehlbotschaft übermittelt. Dieses andere Steuergerät kann auch Teil der Autopiloteinrichtung oder des Fahrerassistenzsystems sein.

Dann kann das "aktive" Fußbremsmodul anstatt der elektro-pneumatischen Betriebsbremseinrichtung die Bremsvorgaben der Autopiloteinrichtung oder des Fahrerassistenzsystems umsetzen.

Weil ein solches Fußbremsmodul oder eine solche Betriebsbremsventileinrichtung einen variablen Druck zwischen einem minimalen Druck und einem maximalen Druck aussteuern kann, welcher dem Vorratsdruck im Druckluftvorrat entspricht, ist auch gewährleistet, dass die Bremswirkung im Fehlerfall nicht geringer ausfällt als im Normalfall. Denn im Normalfall kann auch nur ein Bremsdruck angefordert werden, welcher maximal dem Vorratsdruck entspricht.

Die elektrische Ausrüstung umfasst daher bevorzugt eine Autopiloteinrichtung oder ein Fahrerassistenzsystem, welche oder welches ohne Zutun des Fahrers Lenk- und/oder Bremsanforderungssignale in die Lenkeinrichtung und/oder in die Betriebsbremseinrichtung einsteuert, wobei die Lenk- und/oder Bremsanforderungssignale insbesondere in Abhängigkeit von Fahrbetriebsbedingungen erzeugt werden. Unter solchen Fahrbetriebsbedingungen sind alle erdenklichen Bedingungen und Umstände zu verstehen, welche bei einem Fahrbetrieb eines Fahrzeugs auftreten wie beispielsweise das Gier-, Roll- und/oder Nickverhalten, das Brems- oder Beschleunigungsverhalten wie auch der Abstand und/oder die Relativgeschwindigkeit zu einem vorausfahrenden Fahrzeug, aber auch das Verhalten im Stand oder eingeparkten Zustand.

Dabei werden bevorzugt die ohne Zutun des Fahrers erzeugten Lenk- und/oder Bremsanforderungssignale der Autopiloteinrichtung oder des Fahrerassistenzsystems in die Lenkeinrichtung und in die elektro-pneumatische Betriebsbremseinrichtung und/oder in die elektropneumatische Betriebsbremsventileinrichtung eingesteuert.

Dies erfolgt bevorzugt dadurch, dass Steuergeräte der Autopiloteinrichtung, des Fahrerassistenzsystems, der Lenkeinrichtung, der elektro-pneumatischen Betriebsbremseinrichtung und/oder der elektropneumatische Betriebsbremsventileinrichtung an einem gemeinsamen Datenbus angeschlossen sind.

Insbesondere ist gemäß einer ersten Ausführungsform die elektronische Bremssteuereinrichtung der elektro-pneumatischen Betriebsbremseinrichtung oder eine von dieser abweichende Elektronik ausgebildet, dass sie einen Ausfall oder Fehler in dem zweiten elektrischen Energieversorgungskreis, in der zweiten elektrischen Energiequelle oder in der Lenkeinrichtung erkennt, wobei dann die elektronische Bremssteuereinrichtung oder die Elektronik die elektropneumatische Betriebsbremseinrichtung ansteuert, damit diese die von der Autopiloteinrichtung oder dem Fahrerassistenzsystem ausgesteuerten Lenkanforderungssignale in Form von radindividuellen oder seitenindividuellen Bremseingriffen an den Radbremsaktuatoren umsetzt.

Diese erste Ausführungsform hat den allerdings den Nachteil, dass die elektropneumatische Betriebsbremseinrichtung sowohl bei Ausfall des ersten elektrischen Versorgungskreises bzw. der ersten elektrischen Energiequelle wie auch des zweiten elektrischen Versorgungskreises bzw. der zweiten elektrischen Energiequelle keine Informationen mehr über die Lenk- und Bremsanforderungssignale des Fahrers mehr erhält und damit diese nur noch über deren wenigstens einen pneumatischen Betriebsbremskreis umsetzen kann. Ist es für einen Lenkbremseingriff notwendig, dass die elektro-pneumatische Betriebsbremseinrichtung konstruktionsbedingt den wenigstens einen pneumatischen Betriebsbremskreis abschaltet, könnte sie der Betriebsbremsanforderung des Fahrers nicht mehr folgen.

Um diesen Nachteil zu kompensieren, ist gemäß einer zweiten Ausführungsform vorgesehen, dass wenigstens ein von der ersten elektrischen Energiequelle oder von dem ersten Energieversorgungskreis mit elektrischer Energie versorgter und vom Betriebsbremsbetätigungsorgan betätigbarer, elektrischer Signalgeber vorgesehen ist, welcher bei einer Betätigung des Betriebsbremsbetätigungsorgans ein elektrisches Betätigungssignal in die elektronische Bremssteuereinrichtung oder eine von dieser abweichende Elektronik einsteuert. Dabei kann der elektrische Signalgeber in die elektropneumatische Betriebsbremsventileinrichtung integriert sein und insbesondere durch einen elektrischen Schalter gebildet werden.

Gemäß einer dritten Ausführungsform kann wenigstens ein von der ersten elektrischen Energiequelle oder von dem ersten Energieversorgungskreis mit elektrischer Energie versorgter und vom pneumatischen Bremsdruck oder Bremssteuerdruck in dem wenigstens einen pneumatischen Betriebsbremssteuerkreis betätigbarer, elektrischer Signalgeber vorgesehen sein, welcher bei einer Betätigung des Betriebsbremsbetätigungsorgans ein elektrisches Betätigungssignal in die elektronische Bremssteuereinrichtung oder eine von dieser abweichende Elektronik einsteuert. Dabei kann der elektrische Signalgeber in die elektropneumatische Betriebsbremsventileinrichtung integriert sein und insbesondere durch einen elektrischen Drucksensor gebildet werden.

Bei der zweiten und dritten Ausführungsform ist die elektronische Bremssteuereinrichtung oder die Elektronik insbesondere ausgebildet, dass sie einen Ausfall oder Fehler in dem zweiten elektrischen Energieversorgungskreis, in der zweiten elektrischen Energiequelle oder in der Lenkeinrichtung erkennt und bei Erkennen eines solchen Fehlers und bei Vorliegen des Betätigungssignals die von der Autopiloteinrichtung oder dem Fahrerassistenzsystem ausgesteuerten Lenkanforderungssignale ignoriert und nicht umsetzt.

Gemäß einer Weiterbildung weist die Lenkeinrichtung eine insbesondere hydraulische Servounterstützung auf.

Es wird daher eine bevorzugt gegenüber dem elektrischen Bremswertgeber zusätzliche Sensorik vorgesehen, welche in Bezug auf die elektro-pneumatische Betriebsbremseinrichtung vom gleichen ersten elektrischen Versorgungskreis mit elektrischer Energie versorgt wird und erkennt, dass der Fahrer bremsen will. In diesem Fall wird auch bei erkanntem Fehler in der Lenkeinrichtung kein Lenkbremseingriff ausgeführt, da der Fahrer offensichtlich an seinem Platz ist und die Kontrolle übernehmen kann. Die Bremsung erfolgt dann nur mit dem wenigstens einen pneumatischen Betriebsbremskreis der elektro-pneumatischen Betriebsbremseinrichtung. Die zweite Ausführungsform ist allerdings nicht geeignet, um eine Redundanz einer Servounterstützung der Lenkeinrichtung darzustellen.

Gemäß einer vierten Ausführungsform ist die elektropneumatische Betriebsbremsventileinrichtung zusätzlich von der ersten elektrischen Energiequelle oder von dem ersten Energieversorgungskreis mit elektrischer Energie versorgt ist.

Bei der dritten und vierten Ausführungsform erhält der elektrische Betriebsbremskreis der elektro-pneumatischen Betriebsbremseinrichtung auch bei Ausfall des ersten elektrischen Versorgungskreises oder der ersten elektrischen Energiequelle die Fahrerbremsanforderung und kann diese umsetzen. Dadurch können die Bremsdrücke in den Radbremsaktuatoren zur Lenkbremsung entsprechend modifiziert werden und somit sowohl die Fahrerbremsanforderung als auch die Lenkanforderung gleichzeitig umgesetzt werden. Diese Ausführungsformen sind daher auch geeignet, eine Redundanz einer Servounterstützung der Lenkeinrichtung darzustellen.

Gemäß einer weiteren Ausführungsform ist die elektronische *Auswerteeinrichtung* der Betriebsbremsventileinrichtung oder eine von dieser abweichende Elektronik ausgebildet, dass sie einen Ausfall oder einen Fehler in dem ersten elektrischen Energieversorgungskreis, in der ersten elektrischen Energiequelle oder im elektrischen Betriebsbremskreis der elektro-pneumatischen Betriebsbremseinrichtung erkennt, wobei dann die elektronische Auswerteeinrichtung oder die Elektronik die Betriebsbremsventileinrichtung ansteuert, damit diese die von der Autopiloteinrichtung oder vom Fahrerassistenzsystem ausgesteuerten Bremsanforderungssignale in Form von Bremseingriffen an den Radbremsaktuatoren umsetzt.

Wie oben bereits ausgeführt, wird bei der Erfindung der wenigstens eine Steuerkolben der Betriebsbremsventileinrichtung außer durch die erste Betätigungskraft bei Vorliegen einer vom Fahrerwunsch unabhängigen Bremsanforderung zusätzlich durch eine zweite Betätigungskraft oder anstatt der ersten Betätigungskraft durch eine zweite Betätigungskraft belastet, welche in Bezug zur ersten Betätigungskraft parallel und gleichsinnig oder gegensinnig auf den wenigstens einen Steuerkolben wirkt und unabhängig von einer Fahrerbremsanforderung auf der Basis von durch die elektronische Steuereinrichtung der Betriebsbremsventileinrichtung ausgesteuerten elektrischen Signalen erzeugt wird.

Mit anderen Worten wirken auf den Steuerkolben der Betriebsbremsventileinrichtung die erste, von einer Fahrerbremsanforderung abhängige Betätigungskraft und/oder bei Vorliegen einer vom Fahrerwunsch unabhängigen Bremsanforderung die zweite Betätigungskraft in paralleler Weise, wobei die zweite Betätigungskraft auf der Basis von durch die elektronische Steuereinrichtung der Betriebsbremsventileinrichtung ausgesteuerten elektrischen Signalen erzeugt wird. Folglich vermögen entweder beide Betätigungskräfte (erste und zweite Betätigungskraft) zusammen oder auch jede Betätigungskraft einzeln für sich ohne Vorhandensein der jeweils anderen Betätigungskraft den Steuerkolben und damit auch das Doppelsitzventil des Betriebsbremsventils zu betätigen. Dabei können die beiden Betätigungskräfte gleichsinnig, d.h. in gleicher Richtung auf den Steuerkolben wirken als auch gegensinnig, d.h. in entgegengesetzter Richtung.

Die erste, abhängig von einer Fahrerbremsanforderung erzeugte Betätigungskraft wirkt auf den wenigstens einen Steuerkolben stets in der gleichen Richtung, nämlich bedingt durch die Betätigungsrichtung des Bremsbetätigungsorgans in Richtung Öffnen des Auslasssitzes des Doppelsitzventils zum Belüften des wenigstens einen Betriebsbremskreises, so dass die Begriffe "gleichsinnig" bzw. "gegensinnig" in Bezug zur Wirkungsrichtung der ersten Betätigungskraft klar definiert sind. Dabei ist klar, dass im Falle einer mangels Fahrerbremsanforderung nicht vorhandenen ersten Betätigungskraft deren Wirkrichtung auf den wenigstens einen Steuerkolben lediglich gedacht ist, um eine Referenz für die hierzu dann parallele Wirkrichtung der zweiten Betätigungskraft angeben zu können.

Damit ergeben sich neue Steuerungsmöglichkeiten der elektropneumatischen Betriebsbremseinrichtung, indem nun der wenigstens eine pneumatische Betriebsbremskreis neben einer Betätigung durch den Fahrer nun auch elektrisch oder elektronisch und damit ohne Zutun des Fahrers bei Vorliegen einer Bremsanforderung automatisiert betätigt werden kann. Die Steuerung oder Regelung des wenigstens einen pneumatischen Betriebsbremskreises der elektropneumatischen Betriebsbremseinrichtung durch die elektronische Steuereinrichtung der Betriebsbremsventileinrichtung kann dann durch beliebige elektrische Steuersignale eines beliebigen Fahrzeugsystems bzw. einer beliebigen "Autorität" erfolgen, welche eine Bremsanforderung erzeugen kann.

Die dadurch erzielbaren Vorteile liegen grundsätzlich darin, dass innerhalb des eigentlich pneumatischen Kanals einer elektropneumatischen Betriebsbremsventileinrichtung oder eines Fußbremsmoduls Bremsdrücke bzw. Bremssteuerdrücke für pneumatische Betriebsbremskreise unabhängig von einer Fahrerbremsanforderung automatisch erzeugt werden können.

Damit können insbesondere bereits in der Betriebsbremsventileinrichtung, d.h. an zentraler Stelle und für alle an die Betriebsbremsventileinrichtung angeschlossenen pneumatischen Betriebsbremskreise entsprechende Bremsdrücke ohne Zutun bzw. Einflussnahme des Fahrers insbesondere dann erzeugt werden, wenn ein Fehler oder ein Ausfall des elektrischen Bremskreises der elektropneumatischen Betriebsbremseinrichtung, insbesondere in dessen elektrischer Energieversorgung, in dessen elektronischer Bremssteuereinrichtung oder in dessen elektropneumatischen Modulatoren festgestellt wurde. Dadurch steht auch bei einem Fehler oder Ausfall des elektrischen Betriebsbremskreises ein weiterer elektrischer Betriebsbremskreis zur Verfügung, der dann von der elektronischen Steuereinrichtung der Betriebsbremsventileinrichtung gesteuert wird.

Damit wird die Voraussetzung geschaffen, dass durch geringfügige Änderungen einer elektropneumatischen Betriebsbremsventileinrichtung des Stands der Technik deren Funktionalität vorteilhaft im Sinne einer automatischen, ohne Zutun des Fahrers bewirkten Bremsensteuerung erweitert wird, indem deren elektronische Steuereinrichtung um Steuer- oder Regelalgorithmen ergänzt wird, durch welche dann die zweite Betätigungskraft mit Hilfe eines vorzugsweise zusätzlich vorzusehenden elektrischen, elektrohydraulischen oder elektropneumatischen Aktuators erzeugbar ist, der von der elektronischen Steuereinrichtung des Fußbremsmoduls angesteuert wird.

Eine mit einer solchen Betriebsbremsventileinrichtung versehene Betriebsbremseinrichtung reagiert dann bei einer automatischen (Fremd-) Betätigung wie bei einer Fahrerbremsanforderung, beispielsweise im Hinblick auf die Bremskraftverteilung oder die Steuerung der Anhängerbremsen. Die Betriebsbremsventileinrichtung ist dann insbesondere für ein oben beschriebenes (teil-)autonomes Fahren des Fahrzeugs innerhalb einer Fahrzeugkolonne geeignet, da bei Auftreten eines Fehlers in dem elektrischen Betriebsbremskreis eine automatisiert gesteuerte Bremsung noch über den wenigstens einen pneumatischen Betriebsbremskreis möglich ist.

Weiterhin wird mit der Erfindung die vom Gesetzgeber bei Fahrzeugbremsen geforderte Fehlertoleranz erfüllt. Da darüber hinaus mit der Erfindung ein zusätzlicher wenigstens teilweise elektrischer Betriebsbremskreis geschaffen wird, dessen elektrischer Anteil sich bis zu dem Aktuator erstreckt, der die zweite Betätigungskraft erzeugt, liegen in Bezug zu dem wenigstens einen pneumatischen Betriebsbremskreis unterschiedlich aufgebaute Bremskreise vor, wobei dann die Gefahr reduziert wird, dass dann beide Bremskreise von einem identischen oder gleichartigen Fehler außer Betrieb gesetzt werden. Mithin ist mit dem zusätzlichen (teil-)elektrischen Betriebsbremskreis möglich, die maximale zur Verfügung stehende Bremsleistung auszusteuern, da sich der wenigstens eine pneumatische Betriebsbremskreis des vollen Vorratsdrucks aus einem Druckluftvorrat bedienen kann. Nicht zuletzt können bestehende elektropneumatische Betriebsbremseinrichtungen einfach durch Austausch der Betriebsbremsventileinrichtung mit der Erfindung ausgestattet werden, ohne dass eine Änderung der elektrischen Verkabelung oder pneumatischen Verrohrung am Fahrzeug vorgenommen werden muss.

Wesentlich bei der Erfindung ist auch, dass der Fahrer die durch die zweite Betätigungskraft bewirkte Bremsanforderung jederzeit durch eine Betätigung des Bremsbetätigungsorgans der Betriebsbremsventileinrichtung übersteuern kann, weil dann parallel zu der zweiten Betätigungskraft die auf der Fahrerbremsanforderung basierende erste Betätigungskraft auf den wenigstens einen Steuerkolben aufgebracht wird, welche unter Umständen größer als die zweite Betätigungskraft und auch dieser entgegen gerichtet ist.

Denn in manchen Fällen kann es wünschenswert oder notwendig sein, dass der durch die erste Betätigungskraft auf den Steuerkolben repräsentierte Fahrerbremswunsch durch Erzeugen einer entsprechend großen und entgegen wirkenden zweiten Betätigungskraft übersteuert wird, beispielsweise dann, wenn der Fahrer bei einer oben beschriebenen Kolonnenfahrt mit jeweils geringem Abstand zu dem vorausfahrenden und nachfolgenden Fahrzeug plötzlich eine Vollbremsung einleiten möchte, wodurch die Gefahr eines Auffahrunfalls entstehen würde.

Besonders bevorzugt wird eine solche zweite Betätigungskraft auch erzeugt, wenn ein Fehler oder ein Ausfall des elektrischen Betriebsbremskreises der elektropneumatischen Betriebsbremseinrichtung festgestellt worden ist und wenn eine Bremsanforderung vorliegt. Von einem solchen Fehler oder Ausfall kann insbesondere die elektronische Bremssteuereinrichtung, wenigstens ein elektropneumatischer Achsmodulator oder auch der elektrische Kanal des elektropneumatischen Betriebsbremsventils betroffen sein. Denkbar ist aber auch ein Ausfall der elektrischen Energieversorgung des elektrischen Betriebsbremskreises.

Es versteht sich, dass im Falle mehrerer pneumatischer Kanäle der Betriebsbremsventileinrichtung auch mehr als nur ein einziger Steuerkolben durch die zweite Betätigungskraft belastet werden kann bzw. auch nur ein einziger Steuerkolben, welcher dann die zweite Betätigungskraft auf einen weiteren Betätigungskolben überträgt.

Bevorzugt beinhalten die Mittel zur Erzeugung der zweiten Betätigungskraft wenigstens einen elektrischen, elektrohydraulischen oder elektropneumatischen Aktuator. Denkbar sind dabei dann Ausführungsformen, bei denen die zweite Betätigungskraft mit Hilfe eines elektropneumatischen, elektrohydraulischen oder elektromechanischen Aktuators wie z.B. Magnetventil, Elektromotor usw. erzeugt werden, welcher dann direkt oder indirekt auf den wenigstens einen Steuerkolben der Betriebsbremsventileinrichtung wirkt.

Gemäß einer Weiterbildung beinhalten die Mittel zur Erzeugung der zweiten Betätigungskraft wenigstens eine elektro-pneumatische Magnetventileinrichtung, welche abhängig von den elektrischen Signalen zur Bildung der zweiten Betätigungskraft wenigstens einen pneumatischen Steuerdruck aussteuert, von welchem die zweite Betätigungskraft abhängig ist. Auf ein Signal der elektronischen Steuereinrichtung der Betriebsbremsventileinrichtung hin wird daher ein Steuerdruck ausgesteuert, der auf den wenigstens einen Steuerkolben direkt oder indirekt wirkt. Dieser Steuerdruck erzeugt dann an dem wenigstens einen Steuerkolben die zweite Betätigungskraft. Besonders bevorzugt wird die zweite Betätigungskraft daher elektro-pneumatisch unter bestmöglicher Nutzung der bereits vorhandenen Verhältnisse an der Betriebsbremsventileinrichtung erzeugt.

Insbesondere wird dabei der von der wenigstens einen Magnetventileinrichtung ausgesteuerte Steuerdruck mittels einer Sensorik gemessen und durch Abgleich mit einem Sollwert in der elektronischen Steuereinrichtung geregelt, wobei die Sensorik, die Magnetventileinrichtung zusammen mit der elektronischen Steuereinrichtung einen Steuerdruckregler zur Regelung des pneumatischen Steuerdrucks bilden.

Ganz allgemein ist daher vorzugsweise vorgesehen, dass die auf den wenigstens einen Steuerkolben wirkende zweite Betätigungskraft, ein von der zweiten Betätigungskraft herrührender Betätigungsweg des wenigstens einen Steuerkolbens der Betriebsbremsventileinrichtung und/oder eine die zweite Betätigungskraft erzeugende Größe, z.B. der oben erwähnte pneumatische Steuerdruck als Ist-Größe gemessen und mit einer Soll-Größe im Sinne einer Regelung abgeglichen wird. Mit Hilfe der hier optionalen Regelung der zweiten Betätigungskraft oder einer der mit ihr in Zusammenhang stehenden obigen Größen kann die Genauigkeit der Bremsdruckeinstellung erhöht werden.

Zur Realisierung einer solchen Regelungsfunktion können Sensormittel vorgesehen werden, durch welche die auf den wenigstens einen Steuerkolben wirkende zweite Betätigungskraft, ein von der zweiten Betätigungskraft herrührender Betätigungsweg des wenigstens einen Steuerkolbens und/oder eine die zweite Betätigungskraft erzeugende Größe als Ist-Größe gemessen wird, sowie Regelungs- und Stellmittel, durch welche die Ist-Größe mit einer Soll-Größe im Sinne einer Regelung abgeglichen wird.

Insbesondere ist der pneumatische Steuerdruck in wenigstens eine Steuerkammer der elektropneumatischen Betriebsbremsventileinrichtung einsteuerbar, welche von dem wenigstens einen Steuerkolben begrenzt ist, wobei die Steuerkammer derart angeordnet ist, dass sie bei Belüftung eine in Bezug zur ersten Betätigungskraft gleichsinnige oder gegensinnige zweite Betätigungskraft an dem wenigstens einen Steuerkolben bewirkt.

Für eine möglichst einfache Realisierung einer solchen Funktionalität kann weiterhin eine erste Steuerkammer in Bezug zu dem wenigstens einen Steuerkolben derart angeordnet sein, dass durch Belüftung der ersten Steuerkammer eine zweite, in Bezug auf die erste Betätigungskraft gleichsinnige Betätigungskraft auf den wenigstens einen Steuerkolben erzeugt wird. Zusätzlich wird aber eine zweite Steuerkammer derart angeordnet, dass durch Belüftung der zweiten Steuerkammer eine zweite, in Bezug auf die erste Betätigungskraft gegensinnige Betätigungskraft auf den wenigstens einen Steuerkolben erzeugt wird.

Dabei kann bevorzugt vorgesehen werden, dass die erste Steuerkammer mittels einer ersten Magnetventileinrichtung oder mittels eines ersten Steuerdruckreglers und die zweite Steuerkammer, unabhängig davon, mittels einer zweiten Magnetventileinrichtung oder mittels eines zweiten Steuerdruckreglers be- oder entlüftbar ist.

Nicht zuletzt kann der wenigstens eine Steuerkolben ein Doppelkolben mit zwei durch eine Kolbenstange verbundenen Kolben sein, von denen ein erster Kolben die erste Steuerkammer und von denen ein zweiter Kolben die zweite Steuerkammer begrenzt, wobei die erste Steuerkammer und die zweite Steuerkammer an voneinander weg weisenden Flächen einer Innenwandung der Betriebsbremsventileinrichtung grenzen, welche von der Kolbenstange dichtend durchragt wird.

Die Erfindung bezieht sich auch auf ein Fahrzeug mit einer solchen wenigstens teilweise elektrischen Brems- und Lenkeinrichtung.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine schematische Querschnittsdarstellung einer Betriebsbremsventileinrichtung einer elektro-pneumatischen Betriebsbremseinrichtung eines Fahrzeugs gemäß einer bevorzugten Ausführungsform der Erfindung in einer Stellung "Fahren";
- Fig.2: einen schematischen Schaltplan einer bevorzugten Ausführungsform einer elektrischen Ausrüstung eines Fahrzeugs, welche eine elektropneumatische Betriebsbremseinrichtung mit einer Betriebsbremsventileinrichtung nach Fig.1 sowie eine Autopiloteinrichtung und eine Lenkeinrichtung beinhaltet;
- Fig.3: eine vereinfachte schematische Darstellung der elektrischen Ausrüstung von Fig.2;
- Fig.4: die Lenkeinrichtung in einer Situation, in welcher der Fahrer lenkt;
- Fig.5: die Lenkeinrichtung in einer Situation, in welcher der Fahrer lenkt;
- Fig.6: die Lenkeinrichtung in einer Situation, in welcher die Autopiloteinrichtung lenkt;
- Fig.7: die Lenkeinrichtung in einer Situation, in welcher der Fahrer und die Autopiloteinrichtung lenken;
- Fig.8a bis 8c: Ausführungsformen einer Magnetventileinrichtung zur Steuerung der Betriebsbremsventileinrichtung.

### Beschreibung der Ausführungsbeispiele

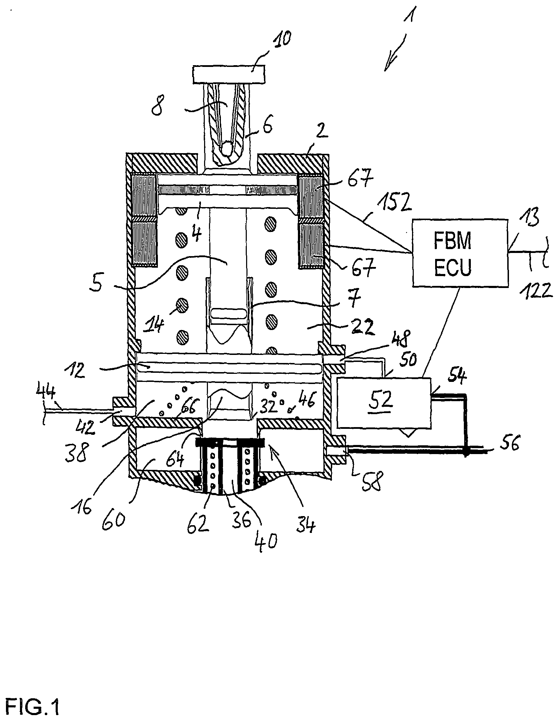

Fig.1 zeigt eine schematische Querschnittsdarstellung einer Betriebsbremsventileinrichtung 1 einer elektro-pneumatischen Betriebsbremseinrichtung einer elektrischen Ausrüstung eines Fahrzeugs gemäß einer bevorzugten Ausführungsform der Erfindung in einer Stellung "Fahren". Unter elektrischer Ausrüstung soll dabei jegliche Fahrzeugausrüstung verstanden werden, welche elektrische Teile oder Komponenten aufweist.

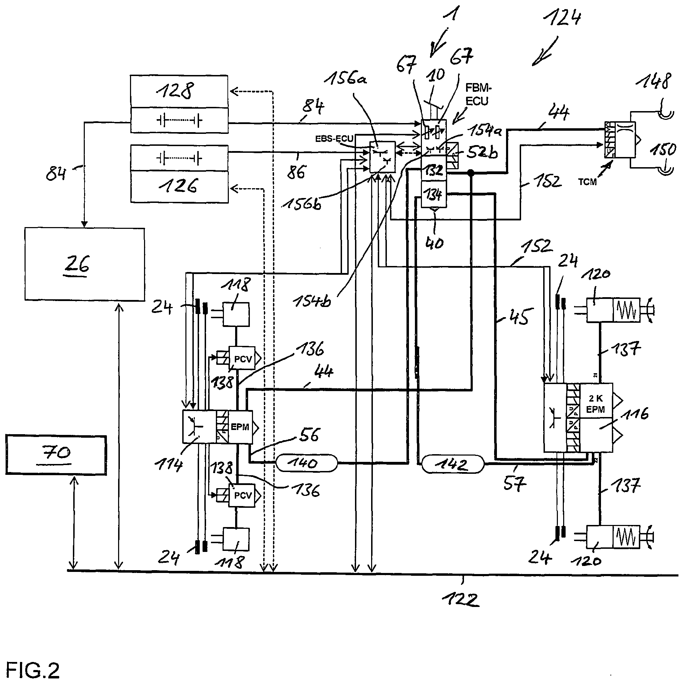

Die Betriebsbremsventileinrichtung 1 hat aus zeichnerischen Vereinfachungsgründen lediglich einen pneumatischen Betriebsbremskreis bzw. einen pneumatischen Kanal 132 bzw. 134, weist aber in der Realität bevorzugt zwei pneumatische Betriebsbremskreise bzw. zwei pneumatische Kanäle 132, 134 auf (siehe Fig.2). Zusätzlich zu den peumatischen Betriebsbremskreisen bzw. den pneumatischen Kanälen 132, 134 ist ein elektrischer Betriebsbremskreis bzw. ein elektrischer Kanal 130 mit einem hier beispielsweise berührungslosen Wegaufnehmer oder Bremswertgeber 67 zur Messung des Betätigungswegs eines Betriebsbremsbetätigungsorgans 10 vorhanden sein. Bei einer solchen elektropneumatischen Betriebsbremsventileinrichtung 1 spricht man auch von einem sog. Fußbremsmodul.

Die Betriebsbremsventileinrichtung 1 wird bevorzugt in der elektropneumatischen Betriebsbremseinrichtung 124 gemäß Fig.2 eingesetzt, welche ein elektronisches Bremssystem (EBS) mit Bremsdruckregelung darstellt, um einerseits in zwei nachrangigen pneumatischen (Backup-)Betriebsbremskreisen jeweils einen pneumatischen Backup-Bremssteuerdruck und andererseits in einem vorrangigem elektrischen Betriebsbremskreis ein von einer Bremsanforderung abhängiges elektrisches Signal in ein elektronisches Betriebsbremssteuergerät EBS-ECU und von dort, evtl. angepasst oder korrigiert, in nachgeordnete elektropneumatische Druckregelmodule 114, 116 einzusteuern, welche abhängig von diesen elektrischen, Soll-Bremsdrücke repräsentierenden Signalen einen entsprechenden Ist-Bremsdruck an Radbremszylinder 118, 120 der jeweils zugeordneten Achse (Vorderachse, Hinterachse) aussteuern.

Solche elektropneumatischen Druckregelmodule 114, 116 sind hinlänglich bekannt und beinhalten neben einem Backup-Magnetventil, welches den zugeordneten Backup-Bremssteuerdruck bei intaktem elektro-pneumatischem Bremskreis zurückhält, eine Einlass-Auslass-Magnetventilkombination, welche ausgangsseitig mit einem Relaisventil verbunden ist. Zusätzlich sind in einem solchen Druckregelmodul 114, 116 ein lokales elektronisches Steuergerät sowie ein Drucksensor zur Messung des vom Relaisventil ausgesteuerten Ist-Bremsdrucks integriert. Der vom Drucksensor gemessene Ist-Bremsdruck wird dann mit einem durch das vom elektrischen Kanal der Betriebsbremsventileinrichtung in das Druckregelmodul 114, 116 eingesteuerte Signal repräsentierten Soll-Bremsdruck im Sinne einer Druckregelung abgeglichen.

Damit ist die Betriebsbremsventileinrichtung 1 vorgesehen, um zum einen den elektrischen Betriebsbremskreis als auch wenigstens einen pneumatischen Betriebsbremskreis (Backup-Bremskreis) eines solchen elektronischen Bremssystems (EBS) zu steuern.

Die Betriebsbremsventileinrichtung 1 hat ein Gehäuse 2, in dem ein Stößelkolben 4 mit einem durch eine Deckelöffnung eines Gehäusedeckels ragenden Stößelaufnahme 6 axial beweglich aufgenommen ist. In die Stößelaufnahme 6 ragt ein Stößel 8 von oben her hinein, welcher mit einem Betriebsbremsbetätigungsorgan 10 in Form einer Fußbremsplatte verbunden ist. Wenn daher der Fahrer die Fußbremsplatte 10 betätigt, drückt der Stößel 8 in die Stößelaufnahme 6 und der Stößelkolben 4 wird durch die Betätigungskraft in Fig.1 nach unten bewegt.

Der Stößelkolben 4 überträgt die Betätigungskraft auf einen im Gehäuse 2 ebenfalls axial beweglich gelagerten Steuerkolben 12 vorzugsweise über eine Stößelkolben-Druckfeder 14. Der Steuerkolben 12 ist gegenüber der Innenwandung 66 mittels einer Steuerkolben-Druckfeder 46 abgestützt.

Weiterhin steht der Steuerkolben 12 über eine Stößelkolbenstange 5 mit dem Stößelkolben 4 in mechanischer Wirkverbindung, wobei die Stößelkolbenstange 5 mit dem Stößelkolben 4 verbunden ist und in einem als becherförmige Hülse ausgebildeten oberen Steuerkolbenstange 7 des Steuerkolbens 12 axial anschlagen kann, wenn die Stößelkolbenstange 5 den Boden der hülsenförmigen oberen Steuerkolbenstange 7 erreicht hat, wenn z.B. der Stößelkolben 4 auf den Steuerkolben 12 infolge einer Betätigung des Betriebsbremsbetätigungsorgans zubewegt wird. Andererseits kann die Stößelkolbenstange 5 in der oberen Steuerkolbenstange 7 gleiten, wenn der Stößelkolben 4 vom Steuerkolben 12 wegbewegt wird.

Auf der anderen Seite des Steuerkolbens 12 ist an einer unteren Steuerkolbenstange 16 ein Auslasssitz 32 eines Doppelsitzventils 34 ausgebildet, welcher gegen einen im Gehäuse 2 axial beweglich gelagerten, becherförmigen und hohlen Ventilkörper 36 des Doppelsitzventils 34 dichtet oder von diesem abgehoben, einen Strömungsquerschnitt zwischen einer Arbeitskammer 38 und einer kopfseitigen Durchgangsöffnung im Ventilkörper 36 freigibt, welche zu einem Entlüftungsanschluss 40 führt. Diese Situation ist in Fig.1 dargestellt.

Die Arbeitskammer 38 steht mit einem Anschluss 42 für einen pneumatischen Betriebsbremskreis in Verbindung, an welchen eine zu einem elektropneumatischen Druckregelmodul 114, 166 einer Achse (Vorderachse, Hinterachse) führende Druckleitung 44 oder 45 angeschlossen ist (Fig.2). In einem solchen Druckregelmodul 114, 116 ist ein Backup-Magnetventil integriert, welches den in der Druckleitung 44, 45 geführten Druck bei intaktem elektrischem Betriebsbremskreis gegenüber an das Druckregelmodul 114, 116 angeschlossene Radbremszylinder 118 bzw. 120 absperrt und bei defektem elektrischem Betriebsbremskreis durchleitet. Hierfür ist es beispielsweise als 2/2-Wegemagnetventil mit stromlos federbelasteter Öffnungsstellung und bestromter Sperrstellung ausgebildet.

Eine Steuerkammer 22 ist zwischen dem Stößelkolben 4 und der zu diesem weisenden Fläche des Steuerkolbens 12 ausgebildet. Dabei mündet ein Anschluss 48 am Gehäuse 2 in die erste Steuerkammer 22.

An den Anschluss 48 ist ein Ausgangsanschluss 50 einer Magnetventileinrichtung 52 angeschlossen ist, welche an ihrem Eingangsanschluss 54 mit einer an einen Druckluftvorrat angeschlossenen Vorratsdruckleitung 56 in Verbindung steht. Weiterhin ist an der Betriebsbremsventileinrichtung 1 ein Vorratsanschluss 58 vorhanden, an welchen ebenfalls die Vorratsdruckleitung 56 angeschlossen ist und welche mit einer Vorratskammer 60 in Verbindung steht.

Der Ventilkörper 36 ist mittels einer am Boden des Gehäuses 2 und am Inneren des Ventilkörpers 36 abgestützten Ventilkörper-Druckfeder 62 gegen einen Einlasssitz 64 des Doppelsitzventils 34 gedrängt, welcher an einem radial inneren Rand einer zentralen Durchgangsbohrung einer weiteren Innenwandung 66 des Gehäuses 2 ausgebildet ist. Im gegen die Wirkung der Ventilkörper-Druckfeder 62 von dem Einlasssitz 64 abgehobenen Zustand des Ventilkörpers 36 wird ein Strömungsquerschnitt zwischen dem Vorratsanschluss 58 bzw. der Vorratskammer 60 und der Arbeitskammer 38 freigegeben, welcher eine Strömung von unter Vorratsdruck stehender Druckluft in den Anschluss 42 für den Betriebsbremskreis, d.h. in die Bremsdruckleitung ermöglicht, um die Radbremszylinder der betreffenden Achse bzw. des betreffenden Bremskreises zu belüften.

Wie bereits oben erwähnt, ist in Fig.1 die Stellung "Fahren" der Betriebsbremsventileinrichtung 1 gezeigt, in welcher der Auslasssitz 32 vom Ventilkörper 36 abgehoben und der Anschluss 42 für den Betriebsbremskreis und damit auch dessen Radbremszylinder mit dem Entlüftungsanschluss 40 verbunden sind. Dadurch sind die aktiven pneumatischen Radbremszylinder dieses Bremskreises entlüftet und damit gelöst.

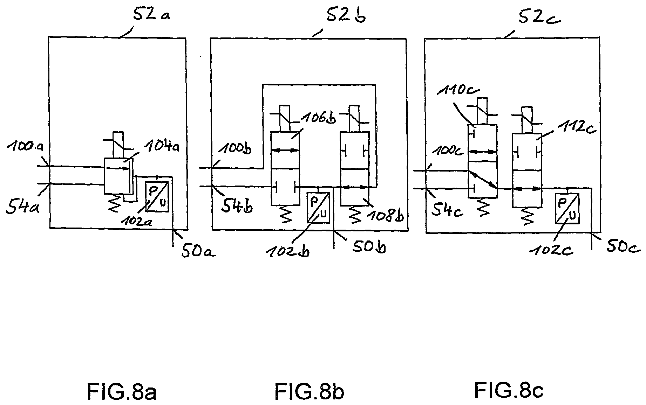

Die Magnetventileinrichtung 52, von welcher einige Ausführungsformen in Fig.8a bis Fig.8b gezeigt sind, ermöglicht eine Be- oder Entlüftung der ersten Steuerkammer 22 und wird von einer elektronischen Steuereinrichtung FBM-ECU gesteuert, welche später noch näher beschrieben wird.

In dem Gehäuse 2 sind weiterhin zwei redundante, vorzugsweise axial hintereinander angeordnete und bevorzugt berührungslos wirkende Wegsensoren 67 im axialen Bereich des Stößelkolbens 4 als Bremswertgeber angeordnet, um dessen Betätigungsweg bzw. den Betätigungsgrad zu messen, welcher proportional zum Betätigungsweg bzw. Betätigungsgrad des Betriebsbremsbetätigungsorgans 10 ist. Die Signale dieser Wegsensoren 67 werden beispielsweise in dem elektrischen Kanal der Betriebsbremsventileinrichtung 1 verwendet und in die elektronische Steuereinrichtung FBM-ECU eingesteuert, welches diese Signale aufbereitet und dadurch z.B. datenbusfähig macht und über eine Schnittstelle 13 in eine Datenkommunikationsleitung 122, z.B. einen Datenbus einsteuert, an den das elektronische Betriebsbremssteuergerät EBS-ECU angeschlossen ist. Insofern stellt elektronische Steuereinrichtung FBM-ECU (auch) eine elektronische Auswerteeinrichtung für die Signale der Wegsensoren 67 dar.

Die elektronische Steuereinrichtung FBM-ECU, die erste Magnetventileinrichtung 52 und die zugeordnete Verkabelung bzw. pneumatische Verrohrung oder pneumatischen Leitungen bilden zusammen mit den im Gehäuse 2 angeordneten Bauteilen der Betriebsbremsventileinrichtung 1 vorzugsweise eine Baueinheit, wobei die elektronische Steuereinrichtung FBM-ECU, die erste Magnetventileinrichtung 52 und die zugeordnete Verkabelung bzw. pneumatische Verrohrung oder pneumatischen Leitungen auch in einem eigenen Gehäuse untergebracht sein können, welches dann beispielsweise an das Gehäuse 2 angeflanscht ist.

Wenn nun der Fahrer das Betriebsbremsbetätigungsorgan 10 der Betriebsbremsventileinrichtung 1 betätigt, was einer Fahrerbremsanforderung entspricht, so wird der Stößelkolben 4 nach unten verschoben, wobei der Stößelkolben 5 gegen den Boden der becherförmigen Hülse 7 gedrängt und der Steuerkolben 12 ebenfalls nach unten verschoben wird, bis der Auslasssitz 32 gegen den Ventilkörper 36 dichtet und damit die Verbindung zwischen dem Anschluss 42 für den Betriebsbremskreis und dem Entlüftungsanschluss 40 verschließt, so dass keine weitere Entlüftung der zugeordneten Radbremszylinder 118, 120 mehr erfolgen kann.

Bei weiter gehender Betätigung des Betriebsbremsbetätigungsorgans 10 auf die Fahrerbremsanforderung hin wird dann der Ventilkörper 36 mit an ihm anliegenden Auslasssitz 32 unter Abheben vom Einlasssitz 64 nach unten gedrängt. Dadurch gelangt Druckluft unter Vorratsdruck von der Vorratskammer 60 in die Arbeitskammer 38 und von dort in den Anschluss 42 für den Betriebsbremskreis bzw. in die zugeordneten Radbremszylinder, um diese zu belüften und damit zuzuspannen. Dabei handelt es sich um eine reine Fahrerbremsung, bei welcher aufgrund der auf das Betriebsbremsbetätigungsorgan 10 vom Fahrer fahrerbremsanforderungsabhängig ausgeübten Betätigungskraft über die Stößelkolben-Druckfeder 14 eine erste Betätigungskraft auf den Steuerkolben 12 ausgeübt wird, welche diesen letztlich in seine Belüftungsstellung stellt.

Bei einer solchen rein durch eine Fahrerbremsanforderung initiierten Bremsung ist die erste Magnetventileinrichtung 52 mittels der elektronischen Steuereinrichtung FBM-ECU in Entlüftungsstellung gesteuert, in welcher die erste Steuerkammer 22 mit der Atmosphäre in Verbindung steht, zur Vermeidung von Druckeffekten, die infolge der Expansion der ersten Steuerkammer 22 entstehen.

Je nach Modulation des in die Steuerkammer 22 eingesteuerten pneumatischen Steuerdrucks durch die Magnetventileinrichtung 52 ist es dann möglich, eine definierte zweite Betätigungskraft am zweiten Steuerkolben 12 einzustellen, was wiederum in einer entsprechenden Bremskraft resultiert, so dass die Einstellung einer beliebigen Bremskraft zwischen dem Wert Null und einer aus dem Vorratsdruck in der Vorratsdruckleitung 56 bzw. 57 resultierenden maximalen Bremskraft möglich ist. Im vorliegenden Fall wirkt die zweite Betätigungskraft beispielsweise richtungsgleich und parallel in Bezug auf die erste Betätigungskraft. Es ist aber auch eine gegenläufige Wirkrichtung der zweiten Betätigungskraft denkbar.

Wenn bei der Ausführungsform von Fig.1 ohne vorliegende Fahrerbremsanforderung die erste Magnetventileinrichtung 52 mittels der elektronischen Steuereinrichtung FBM-ECU in Belüftungsstellung gestellt wird, wird die erste Steuerkammer 22 mit einem pneumatischen Steuerdruck beaufschlagt, welcher wiederum eine hier nach unten gerichtete zweite Betätigungskraft am Steuerkolben 12 erzeugt, welcher dann wie bei der oben beschriebenen Fahrerbetätigung welche diesen letztlich in seine Belüftungsstellung stellt.

Weiterhin wirkt dann der in der ersten Steuerkammer 22 herrschende Steuerdruck auch auf den Stößelkolben 4 und damit auf das Betriebsbremsbetätigungsorgan 10 zurück, was der Fahrer an seinem Fuß spüren kann, wenn er das Betriebsbremsbetätigungsorgan 10 berührt (Pedalrückwirkung). Damit kann der Fahrer eine Einleitung einer automatischen Bremsung am Fuß spüren.

Neben einer durch den Fahrer initiierten Betriebsbremsung und einer ohne Zutun des Fahrers aufgrund von automatisiert erzeugten Betriebsbremsanforderungssignalen initiierten Betriebsbremsung ist weiterhin auch eine kombinierte Betriebsbremsung denkbar, bei welcher mit der Betriebsbremsventileinrichtung 1 sowohl auf eine Fahrerbremsanforderung als auch auf eine automatisch generierte Bremsanforderung hin gebremst wird. Dann wirken auf den Steuerkolben 12 einerseits die erste Betätigungskraft aus der Fahrerbetriebsbremsanforderung wie auch die zweite Betätigungskraft aus der automatisch generierten Bremsanforderung hier beispielsweise gleichsinnig und parallel, wodurch sich die Beträge der beiden Betätigungskräfte am Steuerkolben 12 beispielsweise addieren.

Der von der ersten Magnetventileinrichtung 52 ausgesteuerte Steuerdruck für die erste Steuerkammer 22 kann einer Druckregelung unterworfen sein. In diesem Fall wird der Ist-Steuerdruck am Ausgangsanschluss 50 mit einem Drucksensor gemessen und von der elektronischen Steuereinrichtung FBM-ECU gegenüber einem vorgegebenen Soll-Steuerdruck durch eine entsprechende Ansteuerung der ersten Magnetventileinrichtung 52 abgeglichen. Die Magnetventileinrichtung 52 bildet dann zusammen mit dem Drucksensor und der elektronischen Steuereinrichtung ECU einen Druckregler für den Steuerdruck in der Steuerkammer 22.

In Fig.8a bis Fig.8c sind nun Beispiele für Magnetventileinrichtungen 52a, 52b, 52c bzw. Steuerdruckregler 52a, 52b, 52c dargestellt, wie sie in den vorangehenden Ausführungsbeispielen den pneumatischen Steuerdruck für die Steuerkammer 22 steuern bzw. regeln. Vereinfachend sind dabei lediglich die in Fig.1 verwendeten Bezugszeichen angetragen.

Diesen Beispielen ist gemeinsam, dass sie von der elektronischen Steuereinrichtung ECU gesteuert werden, einen Eingangsanschluss 54a, 54b, 54c aufweisen, welcher über die Vorratsdruckleitung 56 mit dem Druckluftvorrat verbunden ist, sowie einen Ausgangsanschluss 50a, 50b, 50c, welcher jeweils mit der ersten Steuerkammer 22 oder mit der zweiten Steuerkammer 24 in Verbindung steht oder in Verbindung gebracht wird. Weiterhin weisen alle Ausführungen eine Entlüftung 100a, 100b, 100c auf sowie einen Drucksensor 102a, 102b, 102c zum Messen des Ist-Steuerdrucks am Ausgangsanschluss 50a, 50b, 50c, so dass in Verbindung mit entsprechenden Algorithmen in der elektronischen Steuereinrichtung ECU, welche das am Ausgangsanschluss 50a, 50b, 50c anstehende Ist-Steuerdrucksignal gemeldet wird, eine Druckregelung des ausgesteuerten Steuerdrucks möglich ist bzw. auch durchgeführt wird.

Bei der Ausführung von Fig.8a sorgt ein Proportionalventil 104a für einen entsprechend dem elektrischen Steuersignal (proportional) ausgesteuerten Steuerdruck am Ausgangsanschluss 50a, wobei ebenfalls eine Be- und Entlüftung möglich ist. Bei der Ausführung von Fig.8b ist eine Einlass-/Auslassventilkombination aus zwei 2/2-Wege-Magnetventilen 106b, 108b vorgesehen, wobei das mit dem Eingangsanschluss 54b direkt verbundene Einlassventil 106b unbestromt geschlossen und bestromt geöffnet und das Auslassventil 108b unbestromt geöffnet und bestromt geschlossen ist. Nach Fig.8c wird als Magnetventileinrichtung 52c ein 3/2-Wege-Magnetventil 110c als Be- und Entlüftungsventil mit einer Belüftungsstellung und einer Entlüftungsstellung in Kombination mit einem 2/2-Wege-Magnetventil 112c als Halteventil verwendet, welches in seiner Sperrstellung den Druck am Ausgangsanschluss 50c hält.

Eine solche Magnetventileinrichtung 52a, 52b, 52c kann in jeder der oben beschriebenen Ausführungsformen in Kombination mit dem Drucksensor 102 als Steuerdruckregler verwendet werden, der die elektronische Steuereinrichtung FBM-ECU einschließt, um den am Ausgang 50a, 50b, 50c anstehenden Steuerdruck zu regeln.

Fig.2 zeigt einen schematischen Schaltplan einer bevorzugten Ausführungsform einer elektropneumatischen Betriebsbremseinrichtung 124 eines zur Ankopplung eines Anhängers geeigneten Zugfahrzeugs mit einer oben beschriebenen Betriebsbremsventileinrichtung 1. Lediglich exemplarisch wird dort die Betriebsbremsventileinrichtung 1 gemäß Fig.1 verwendet, wobei dort beispielsweise ein elektrischer Betriebsbremskreis und zwei pneumatische Betriebsbremskreise vorhanden sind.

Die elektropneumatische Betriebsbremseinrichtung 124 bzw. deren elektronische Bremssteuereinrichtung EBS-ECU wird von einer ersten elektrischen Energiequelle 126 mit elektrischer Energie versorgt, die Bestandteil des elektrischen Betriebsbremskreises ist und unabhängig von einer zweiten elektrischen Energiequelle 128 ist, welche beispielsweise die Betriebsbremsventileinrichtung 1 und insbesondere deren elektronische Steuereinrichtung FBM-ECU mit elektrischer Energie versorgt.

Bei der Betriebsbremsventileinrichtung 1 ist der elektrische Kanal 130 für den elektrischen Betriebsbremskreis, der pneumatische Vorderachskanal 132 für den pneumatischen Vorderachsbetriebsbremskreis sowie der pneumatische Hinterachskanal 134 für den pneumatischen Hinterachsbetriebsbremskreis erkennbar. Erkennbar sind auch die Druckleitungen 44, 45, welche den im Vorderachskanal 132 bzw. im Hinterachskanal 134 herrschenden Druck dem zugeordneten Druckregelmodul 114 bzw. 116 zuführen, wo dieser Druck durch das integrierte Backup-Magnetventil zunächst gegenüber den Radbremszylindern 118, 120 abgesperrt wird. Das der Hinterachse zugeordnete Druckregelmodul 116 ist beispielsweise ein 2-Kanal-Druckregelmodul, an der Vorderachse ist demgegenüber ein 1-Kanal-Druckregelmodul 114 verbaut, welches über Bremsdruckleitungen, in die ABS-Drucksteuerventile 138 integriert sind, mit den Radbremszylindern 118 an der Vorderachse in Verbindung steht. Die ABS-Drucksteuerventile werden im Falle von unzulässigem Bremsschlupf von der elektronischen Bremssteuereinrichtung EBS-ECU in bekannter Weise angesteuert, um den Bremsschlupf an den Rädern der Vorderachse an einen zulässigen Bremsschlupf anzupassen. Die Bremsschlupfregelung an den Rädern der Hinterachse erfolgt mittels des dortigen 2-Kanal-Druckregelmoduls 116, welches über Bremsdruckleitungen 137 mit den zugeordneten Radbremszylindern verbunden ist. Zur Radschlupfmessung sind Raddrehzahlsensoren 24 an jedem Rad angeordnet. In die elektronischen Bremssteuereinrichtung EBS-ECU sind Regelroutinen einer ESP- (Elektronisches Stabilitätssystem), ASR-(Antriebsschlupfregelung) und ABS-(Antiblockiersystem, Bremsschlupfregelung) Regelung implementiert.

Vorzugsweise sind für die beiden Betriebsbremskreise (Vorderachse, Hinterachse) jeweils ein eigener Druckluftvorrat 140, 142 vorgesehen, welche jeweils über eine Vorratsdruckleitung 144, 146 einerseits an den jeweiligen pneumatischen Kanal 132, 134 des Betriebsbremsventils und andererseits an die Druckregelmodule 114, 116 angeschlossen sind. Die Druckregelmodule 114, 116 beinhalten eine Einlass/Auslassventilkombination sowie ein von dieser pneumatisch angesteuertes Relaisventil, wobei jeweils abhängig von einer Ansteuerung durch die elektronische Bremssteuereinrichtung EBS-ECU aus dem Vorratsdruck jeweils ein Bremsdruck moduliert und in die Bremsdruckleitungen 136, eingesteuert wird. Weiterhin ist in den Druckregelmodulen 114, 116 für jeden Kanal bzw. in einem Anhängersteuermodul TCM jeweils ein Drucksensor integriert, der den jeweils herrschenden Ist-Bremsdruck in den Bremsdruckleitungen 136, 137 bzw. am Kupplungskopf "Bremse" misst und in lokale elektronische Steuereinrichtungen rückkoppelt, die jeweils in den Druckregelmodulen 114, 116 bzw. in dem Anhängersteuermodul TCM integriert sind, um eine Bremsdruckregelung durch Vergleich mit einem Soll-Bremsdruck in bekannter Weise durchführen zu können.

Über beispielsweise die dem pneumatischen Vorderachsbremskreis zugeordnete Druckleitung 44 wird das hinlänglich bekanntes Anhängersteuermodul TCM redundant druckluftgesteuert, welches priorisiert ebenfalls von der elektronischen Bremssteuereinrichtung EBS-ECU elektrisch gesteuert wird. Das Anhängersteuermodul TCM wird außerdem von einem der Druckluftvorräte 140 oder 142 mittels der Druckluftvorratsleitung 144 oder 146 druckluftversorgt, was aber in Fig.2 nicht gezeigt ist. Ausgangsseitig steht das Anhängersteuermodul TCM mit einem Kupplungskopf "Bremse" 148 und einem Kupplungskopf "Vorrat" 150 in Verbindung, um die Anhängerbremsen in bekannter Weise zu steuern.

Es versteht sich, dass die Druckregelmodule 114, 116, das Anhängersteuermodul TCM sowie die ABS-Drucksteuerventile 138 jeweils mittels einer elektrischen Steuerleitung 152 mit der elektronischen Bremssteuereinrichtung EBS-ECU verbunden sind.

Zu erkennen sind außerdem die vorzugsweise in die z.B. nach Fig.1 ausgebildete Betriebsbremsventileinrichtung 1 z.B. integrierte elektronische Steuereinrichtung FBM-ECU sowie die erste Magnetventileinrichtung 52b, die beispielsweise nach Fig.8b eine Einlass-/Auslassventilkombination 106b, 108b sowie einen Drucksensor 102b enthält. Bei dem gezeigten Ausführungsbeispiel sind diese Komponenten beispielsweise in einem eigenen Gehäuse untergebracht, welches an das Gehäuse der Betriebsbremsventileinrichtung 1 angeflanscht ist. Weiterhin sind auch die redundant vorhandenen Bremswertgeber 67 sichtbar. Die elektronische Steuereinrichtung FBM-ECU beinhaltet beispielsweise zwei redundante, sich gegenseitig überwachende Mikroprozessoren 154a, 154b. In gleicher Weise verfügt auch die elektronische Bremssteuereinrichtung EBS-ECU über zwei redundante Mikroprozessoren 156a, 156b. Die Raddrehzahlsensoren 24 an den Rädern melden außerdem die jeweilige Raddrehzahl an die lokalen Steuergeräte in den Druckregelmoduln 114, 116, die sie dann an das elektronische Bremssteuergerät EBS-ECU weiterschleifen.

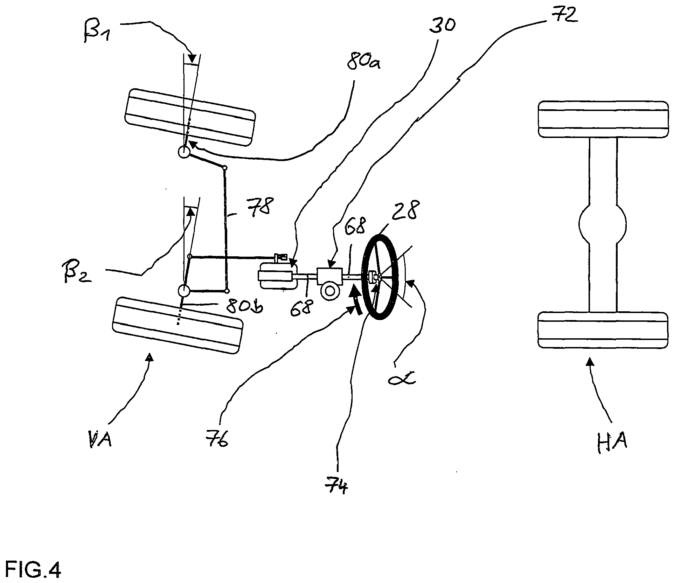

Die elektrische Ausrüstung umfasst weiterhin eine elektromechanische Lenkreinrichtung 26 mit beispielsweise durchgehender mechanischer Verbindung zwischen einem Lenkrad 28 und einem Lenkgetriebe 30 (Fig.4). Ein elektronisches Lenksteuergerät der Lenkeinrichtung 26 kommuniziert mit einem Fahrzeugdatenbus 68, an welchen auch das elektronische Bremssteuergerät EBS-ECU, die elektronische Steuereinrichtung FBM-ECU sowie eine Autopiloteinrichtung 70 angeschlossen sind. Die Autopiloteinrichtung 70 ist ausgebildet, dass sie unter anderem die Lenkeinrichtung 26, die elektropneumatische Betriebsbremseinrichtung 124 sowie die Betriebsbremsventileinrichtung 1 bzw. deren Steuergeräte ohne Zutun des Fahrers ansteuert und stellt damit auch ein Fahrerassistenzsystem dar. Damit wird eine zumindest teilweise automatisierte Steuerung der Bremsen und der Lenkung des Fahrzeugs realisiert, bevorzugt in Abhängigkeit von Fahrbetriebsbedingen wie beispielsweise der Fahrzeuggeschwindigkeit, des Abstands und/oder der Relativgeschwindigkeit in Bezug zu einem vorausfahrenden Fahrzeug, der Fahrzeugstabilität insbesondere auch zusammen mit dem Anhänger usw.. Hierzu empfängt die Autopiloteinrichtung 70 über hier nicht gezeigte Sensoren Fahrbetriebsbedingungen betreffende Daten.

Die Lenkeinrichtung 26 wird über die zweite Energiequelle 128 mit elektrischer Energie versorgt und die Autopiloteinrichtung 70 beispielsweise ebenfalls. Das Anhängersteuermodul TCM, welches vom elektronischen Bremssteuergerät EBS-ECU elektrisch gesteuert ist, steht einerseits mit einem Kupplungskopf "Bremse" 148 und andererseits mit einem Kupplungskopf "Vorrat 150 in Verbindung, wobei an diese Kupplungsköpfe entsprechende, zu dem Anhänger führende Brems- und Vorratsleitungen lösbar angeschlossen sind.

Die elektromechanische Lenkeinrichtung 26 ist im Einzelnen in Fig.4 dargestellt. Das vom Fahrer über das Lenkrad 28 aufgebrachte Lenkradmoment 76 wird über eine Lenkspindel 68 in einen elektrischen Lenkaktuator 72 eingeleitet, welcher beispielsweise durch einen Elektromotor gebildet wird. An der Lenkspindel 68 ist außerdem ein Lenkradmomentsensor 74 angebracht, welcher das jeweils vom Fahrer über das Lenkrad 28 aufgebrachte Lenkradmoment erfasst und als Lenkradmomentsignal in ein hier nicht elektronisches Lenksteuergerät einsteuert, welches an den Datenbus 122 angeschlossen ist (Fig.2).

Das Lenksteuergerät kann grundsätzlich den Lenkaktuator 72 abhängig vom am Lenkrad 28 erfassten Lenkradmoment 76 ansteuern, um ein gegenüber dem vom Fahrer aufgebrachten Lenkradmoment 76 ein zusätzliches Überlagerungsmoment an der Lenksäule 68 zu erzeugen. Deshalb stellt die Lenkeinrichtung hier beispielsweise eine sog. Überlagerungslenkung mit Lenkmomentüberlagerung dar. Anstatt des Lenkradmoments 76 kann auch der jeweilige Lenkradwinkel a durch einen Lenkradwinkelsensor erfasst werden, so dass dann eine Überlagerungslenkung mit Lenkradwinkelüberlagerung vorläge.

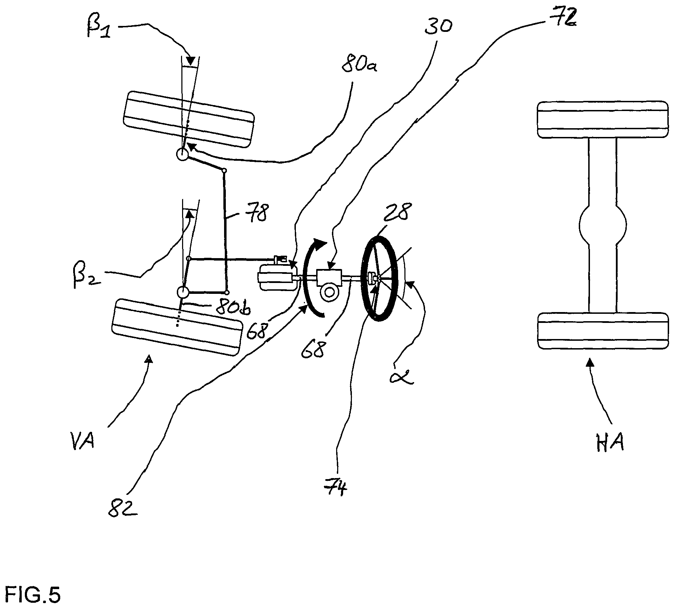

Jedoch kann der Lenkaktuator 72 auch ohne Zutun des Fahrers, d.h. ohne Betätigung des Lenkrads 28 ein Lenkmoment 82 an der Lenkspindel 68 erzeugen (Fig.5). Bei dem in Fig.4 vorliegenden Fall steuert der Lenkaktuator 72 kein Lenkmoment 82 in die Lenkspindel 68 ein, so dass die Lenkkräfte allein von dem vom Fahrer erzeugten Lenkradmoment 76 abgeleitet werden. In Fig.4 ist die Situation gezeigt, in welcher die Lenkanforderung ausschließlich vom Fahrer ausgeht, welcher das Lenkrad 28 entsprechend betätigt.

Das Lenkgetriebe 30 beinhaltet hier bevorzugt eine hydraulische Servounterstützung und verstärkt das Lenkradmoment 76. Das Lenkgetriebe 30 steuert dann über ein Lenkgestänge 78 Achsschenkel 80a, 80b des linken und rechten Vorderrads der gelenkten Vorderachse VA an, um dort jeweils einen Lenkwinkel b₁ und b₂ für rechts und links einzustellen. Die Hinterachse HA ist hier vorzugsweise ungelenkt.

Fig.5 zeigt die Situation, in welcher das an der Lenkspindel 68 wirkende Lenkmoment 82 ausschließlich vom Lenkaktuator 72 aufgrund dessen Ansteuerung durch das elektronische Lenksteuergerät erzeugt wird. Diese Ansteuerung erfolgt beispielsweise durch eine von der Autopiloteinrichtung 70 ausgesteuerte Lenkanforderung, welche mittels des Datenbusses 122 übermittelt wird.

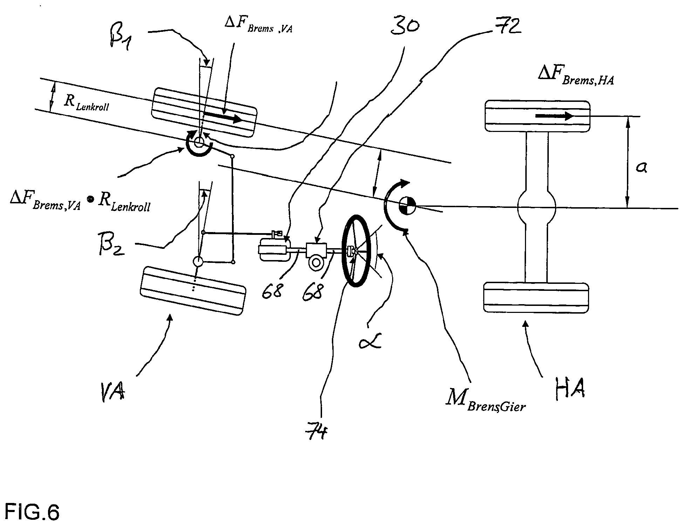

Fig.6 zeigt eine sog. Lenkbremsung, bei welcher durch gezieltes Einbremsen hier beispielsweise des jeweils linken Rads an der Vorderachse VA und an der Hinterachse HA ein Giermoment M_{Brems,Gier} erzeugt wird, welches das Fahrzeug veranlasst, hier beispielsweise einer Linkskurvenbahn zu folgen. Maßgebend für das Giermoment M_{Brems,Gier} ist der Lenkrollradius R_{Lenkroll} am linken Vorderrad, welcher in Kombination mit der dort wirkenden Bremskraft DF_{Brems,VA} ein Bremsmoment DF_{Brems,VA}· R_{Lenkroll} erzeugt, weiterhin die halbe Achslänge a, welche in Kombination mit der Bremskraft DF_{Brems,HA} ein Bremsmoment DF_{Brems,HA} · a erzeugt. Die Lenkbremsanforderung wird hier von der Autopiloteinrichtung 70 initiiert und über den Datenbus 122 an das elektronischen Bremssteuergerät EBS-ECU übermittelt, welches daraufhin die Einbremsung der beiden Räder veranlasst.

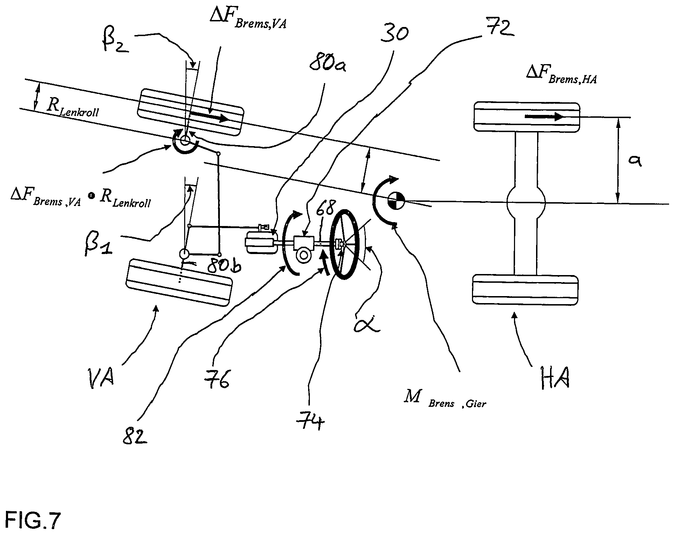

In Fig.7 ist die Situation dargestellt, bei welcher ein vom Fahrer über das Lenkrad 28 auf die Lenkspindel 68 aufgebrachtes Lenkradmoment 76 einem vom Lenkaktuator 72 aufgebrachten Lenkmoment 82 überlagert wird. Weiterhin ist auch Giermoment M_{Brems,Gier} aufgrund einer Lenkbremsung wirksam. Daher ist hier der fall gezeigt, bei welchem die in Fig.4 bis Fig.6 gezeigten Möglichkeiten einer Lenkung des Fahrzeugs einander überlagert sind.

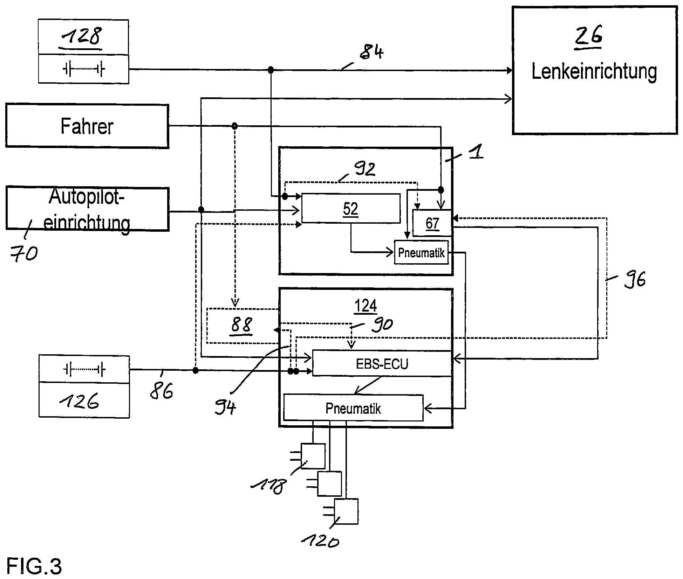

Fig.3 zeigt nun schematisch verschiedene Ausführungsformen einer Stromversorgung der elektrischen und elektronischen Komponenten der elektrischen Ausrüstung des Fahrzeugs.

Gemäß einer ersten Ausführungsform werden die Lenkeinrichtung 26 sowie die Betriebsbremsventileinrichtung 1 bzw. deren elektronische Steuereinrichtung FBM-ECU von der zweiten elektrischen Energiequelle 128 und die elektropneumatische Betriebsbremseinrichtung 124 bzw. deren Bremssteuergerät EBS-ECU von der ersten elektrischen Energiequelle 126 stromversorgt. Die entsprechenden Energieversorgungsleitungen 84, 86 sind in Fig.3 in durchgezogenen Linien mit dreieckflächenförmigen Pfeilen gekennzeichnet. Optional wird hier der Bremswertgeber 67 der Betriebsbremsventileinrichtung 1 ebenfalls von der zweiten elektrischen Energiequelle 128 stromversorgt, wie durch die gestrichelt gezeichnete Energieversorgungsleitung 92 angedeutet wird.

Dabei ist die elektronische Bremssteuereinrichtung 1 der elektro-pneumatischen Betriebsbremseinrichtung 124 bzw. deren elektronische Steuereinrichtung FBM-ECU ausgebildet, dass sie einen Ausfall oder Fehler in einem die zweite elektrischen Energiequelle 128 beinhaltenden zweiten elektrischen Energieversorgungskreis oder in der Lenkeinrichtung 26 erkennt, wobei dann die elektronische Bremssteuereinrichtung 1 bzw. deren elektronische Steuereinrichtung FBM-ECU die elektro-pneumatische Betriebsbremseinrichtung 124 ansteuert, damit diese von der Autopiloteinrichtung 70 eventuell ausgesteuerte Lenkanforderungssignale in Form von radindividuellen oder seitenindividuellen Bremseingriffen an den Radbremsaktuatoren umsetzt.

Gemäß einer zweiten Ausführungsform ist vorgesehen, dass wenigstens ein beispielsweise von der ersten elektrischen Energiequelle 126 oder von dem ersten Energieversorgungskreis mit elektrischer Energie über eine in gestrichelter Linie dargestellte Energieversorgungsleitung 94 versorgter und vom Betriebsbremsbetätigungsorgan 10 betätigbarer, elektrischer Signalgeber 88 vorgesehen ist, welcher bei einer Betätigung des Betriebsbremsbetätigungsorgans 10 über eine in Fig.3 in gestrichelter Linie gezeichnete Signalleitung 90 ein elektrisches Betätigungssignal in die elektronische Bremssteuereinrichtung EBS-ECU einsteuert. Dabei kann der elektrische Signalgeber 88 in die elektropneumatische Betriebsbremsventileinrichtung 1 integriert sein und insbesondere durch einen elektrischen Schalter gebildet werden.

Gemäß einer dritten Ausführungsform kann wenigstens ein von der ersten elektrischen Energiequelle 126 oder von dem ersten Energieversorgungskreis mit elektrischer Energie versorgter und vom pneumatischen Bremsdruck oder Bremssteuerdruck in einem oder beiden pneumatischen Betriebsbremssteuerkreis(en) betätigbarer, elektrischer Signalgeber 88 vorgesehen sein, welcher bei einer Betätigung des Betriebsbremsbetätigungsorgans 10 ein elektrisches Betätigungssignal in die elektronische Bremssteuereinrichtung EBS-ECU einsteuert. Dabei kann der elektrische Signalgeber 88 wiederum in die elektropneumatische Betriebsbremsventileinrichtung 1 integriert sein und insbesondere durch einen elektrischen Drucksensor gebildet werden. Dieser vom Signalgeber 88 gemessene Bremsdruck oder Bremssteuerdruck steht jeweils in den Druckleitungen 44, 45 der beiden pneumatischen Betriebsbremskreise an (Fig.2). Bei der dritten Ausführungsform wird der Bremswertgeber 67 der Betriebsbremsventileinrichtung 1 über eine in gestrichelter Linie gezeichnete Energieversorgungsleitung 96 beispielsweise von der ersten elektrischen Energiequelle 126 stromversorgt.

Bei der zweiten und dritten Ausführungsform ist die elektronische Bremssteuereinrichtung EBS-ECU insbesondere ausgebildet, dass sie einen Ausfall oder Fehler in dem die zweiten elektrische Energiequelle 128 beinhaltenden zweiten elektrischen Energieversorgungskreis oder in der Lenkeinrichtung 26 erkennt und bei Erkennen eines solchen Fehlers und bei Vorliegen eines vom Signalgeber 88 erzeugten Betätigungssignals von der Autopiloteinrichtung 70 eventuell ausgesteuerte Lenkanforderungssignale ignoriert und nicht umsetzt.

Es wird daher ein bevorzugt gegenüber dem elektrischen Bremswertgeber 67 zusätzlicher Signalgeber 88 vorgesehen, welcher in Bezug auf die elektropneumatische Betriebsbremseinrichtung 124 vom gleichen ersten elektrischen Versorgungskreis 126 mit elektrischer Energie versorgt wird und erkennt, dass der Fahrer bremsen will. In diesem Fall wird auch bei erkanntem Fehler in der Lenkeinrichtung 26 kein Lenkbremseingriff ausgeführt, da der Fahrer offensichtlich an seinem Platz ist und die Kontrolle übernehmen kann. Die Bremsung erfolgt dann nur mit den pneumatischen Betriebsbremskreisen der elektropneumatischen Betriebsbremseinrichtung 124.

Gemäß einer vierten Ausführungsform ist die elektropneumatische Betriebsbremsventileinrichtung 1 bzw. deren Steuereinrichtung FBM-ECU zusätzlich von dem ersten, die erste elektrische Energiequelle 126 beinhaltenden Energieversorgungskreis mit elektrischer Energie versorgt. Dabei wird der Bremswertgeber 67 der Betriebsbremsventileinrichtung 1 über die Energieversorgungsleitung 92 von der zweiten elektrischen Energiequelle 128 stromversorgt.

Bei der dritten und vierten Ausführungsform erhält der elektrische Betriebsbremskreis der elektro-pneumatischen Betriebsbremseinrichtung 124 auch bei Ausfall des ersten elektrischen Versorgungskreises oder der ersten elektrischen Energiequelle 126 die Fahrerbremsanforderung und kann diese umsetzen. Dadurch können die Bremsdrücke in den Radbremsaktuatoren 118, 120 zur Lenkbremsung entsprechend modifiziert werden und somit sowohl eine Fahrerbremsanforderung als auch eine Lenkanforderung gleichzeitig umgesetzt werden. Diese Ausführungsformen sind daher auch geeignet, eine Redundanz der Servounterstützung im Lenkgetriebe 30 der Lenkeinrichtung 26 darzustellen.

Gemäß einer weiteren Ausführungsform ist die elektronische Steuereinrichtung FBM-ECU der Betriebsbremsventileinrichtung 1 ausgebildet, dass sie einen Ausfall oder einen Fehler in dem die erste elektrische Energiequelle 126 beinhaltenden ersten elektrischen Energieversorgungskreis oder im elektrischen Betriebsbremskreis der elektro-pneumatischen Betriebsbremseinrichtung 124 erkennt, wobei dann die Steuereinrichtung FBM-ECU die Betriebsbremsventileinrichtung 1 ansteuert, damit diese eventuell von der Autopiloteinrichtung 70 ausgesteuerten Bremsanforderungssignale in Form von Bremseingriffen an den Radbremsaktuatoren 118, 120 umsetzt.

Weiterhin ist die Funktionsweise der der elektropneumatischen Betriebsbremseinrichtung 124 wie folgt: Bei intaktem vorrangigem elektrischem Betriebsbremskreis der elektropneumatischen Betriebsbremseinrichtung 124 wird bei einer Fahrerbremsanforderung durch Betätigung des Betriebsbremsbetätigungsorgans 10 ein elektrisches Bremsanforderungssignal mittels der Bremswertgeber 67 in der Betriebsbremsventileinrichtung 1 erzeugt und in die elektronische Steuereinrichtung FBM-ECU der Betriebsbremsventileinrichtung 1 eingesteuert, wo diese Signale aufbereitet und über den Datenbus 122 in die elektronische Bremssteuereinrichtung EBS-ECU eingeleitet werden. Dort werden die Signale durch höhere Funktionen wie z.B. lastabhängige Bremskraftregelung (ALB), Differenzschlupfregelung etc. korrigiert und dann von dort jeweils ein einen Soll-Bremsdruck repräsentierendes Signal an die Druckregelmodule 114, 166 bzw. TCM eingesteuert, wo durch eine entsprechende Betätigung der jeweils dort vorhandenen Einlass-/Auslassventilkombinationen aus dem Vorratsdruck ein entsprechender Bremsdruck moduliert und in die Radbremszylinder 118, 120 geleitet wird, um diese entsprechend zuzuspannen. Mittels der in den Moduln 114, 116, TCM integrierten Drucksensoren wird der Ist-Bremsdruck gemessen und durch Vergleich mit dem Soll-Bremsdruck, der als diesen repräsentierendes Signal in den lokalen Steuergeräten vorliegt, im Sinne einer Bremsdruckregelung angepasst. Die genannten Vorgänge laufen daher in dem vorrangigen elektrischen Betriebsbremskreis ab.

Parallel hierzu wird durch die Betätigung des Betriebsbremsbetätigungsorgans 10 in den beiden pneumatischen Kanälen 132, 134 und dann auch in den dort angeschlossenen Druckleitungen 44, 45 in oben bereits beschriebener Weise ein Bremsdruck erzeugt, welcher aber noch durch die bestromt in Sperrstellung geschalteten Backup-Magnetventile in den Moduln 114, 116, TCM zurückgehalten werden.

Wenn nun ein Fehler oder Defekt in dem vorrangigen elektrischen Betriebsbremskreis auftritt, sei es dass die erste Energiequelle 126, die elektronische Bremssteuereinrichtung EBS-ECU oder eines der lokalen Steuergeräte in den Moduln 114, 116, TCM ausfällt, so schalten die in diesen Moduln integrierten Backup-Magnetventile nun unbestromt in ihre Durchlassstellung, wodurch die in den Druckleitungen 44, 45 anstehenden Bremsdrücke durch die Moduln 114, 116, TCM hindurch an die Radbremszylinder 118, 120 bzw. an den Kupplungskopf "Bremse" geleitet werden, um im Zugfahrzeug bzw. im Anhänger die Radbremsen zuzuspannen. Damit können die Bremsen bei einem Defekt im elektrischen Betriebsbremskreis bisher allerdings nur durch den Fahrer und dann nur rein pneumatisch betätigt werden.

Darüber hinaus ist die elektronische Steuereinrichtung FBM-ECU der elektropneumatischen Betriebsbremsventileinrichtung 1 ausgebildet, dass wenn ein Fehler oder ein Ausfall des vorrangigen elektrischen Betriebsbremskreises der elektropneumatischen Betriebsbremseinrichtung festgestellt worden ist und wenn eine Bremsanforderung vorliegt, sie die erste Magnetventileinrichtung 52b ansteuert, um wie oben beschrieben, eine zweite Betätigungskraft am Steuerkolben 12 zu erzeugen, welche auch ohne Fahrerbremsanforderung in der Lage ist, den Ventilkörper 36 vom Einlasssitz 64 abzuheben, um die zu den Moduln 114, 116, TCM führenden Druckleitungen 44, 45 mit einem entsprechend der zweiten Betätigungskraft gebildeten Bremsdruck zu belüften. Da die dortigen Backup-Magnetventile unbestromt in ihre Durchlassstellungen geschaltet sind, gelangt dieser Bremsdruck dann in die Radbremszylinder 118, 120 bzw. in den Kupplungskopf "Bremse" 148.

Ein Ausfall oder ein Fehler des elektrischen Betriebsbremskreises wird insbesondere im Rahmen einer Selbstüberwachung durch die elektronische Bremssteuereinrichtung EBS-ECU der elektropneumatischen Betriebsbremseinrichtung 124 selbst oder im Rahmen einer Fremdüberwachung durch die elektronische Steuereinrichtung FBM-ECU der elektropneumatischen Betriebsbremsventileinrichtung 1 festgestellt. Denkbar ist aber auch eine Fremdüberwachung durch eine elektronische Steuereinrichtung eines beliebigen dritten Systems. Die Kommunikation erfolgt dabei bevorzugt über den Datenbus 122. Da die elektronische Steuereinrichtung FBM-ECU der Betriebsbremsventileinrichtung 1 von der von der ersten Energiequelle 126 unabhängigen zweiten Energiequelle 128 stromversorgt wird, wird diese Funktionalität auch nicht durch einen Ausfall der ersten Energiequelle 126 verhindert.

Die zweite elektrische Energiequelle kann beispielsweise durch eine separate Batterie, (Doppelschicht-) Kondensatoren, einen weiteren Energiespeicher oder auch ein eigenes Stromerzeugungsgerät (z.B. druckluftbetriebener Generator) dargestellt werden. Die zweite Energiequelle wird bevorzugt auf Ladekapazität und Funktionsfähigkeit überwacht (SOC, SOH, regelmäßiges Laden/Entladen). Die kann beispielsweise mittels der elektronischen Bremssteuereinrichtung EBS-ECU der elektropneumatischen Betriebsbremseinrichtung 124, die elektronische Steuereinrichtung FBM-ECU der Betriebsbremsventileinrichtung 1 oder mittels eines sonstigen Systems wie z.B. die Batterieüberwachung einer Hybridantriebssteuerung des Fahrzeugs erfolgen.

Die Bremsanforderung kann dabei von einem beliebigen System des Fahrzeugs stammen, hier insbesondere von der Autopiloteinrichtung 70 oder beispielsweise auch von einer Fahrzeugfolgeregelung (ACC, Adaptive Cruise Control), durch welche der Abstand bzw. die Relativgeschwindigkeit zu einem vorausfahrenden Fahrzeug konstant gehalten wird. Dann kann die Funktionalität eines solchen ACC-Systems auch dann aufrechterhalten werden, wenn der elektrische Betriebsbremskreis der Betriebsbremsvorrichtung 124 ausgefallen ist.

Die automatisch generierte Bremsanforderung bzw. das automatisch generierte Bremsanforderungssignal wird dann als elektrisches Signal über die Schnittstelle 13 in die Steuereinrichtung FBM-ECU der Betriebsbremsventileinrichtung 1 eingesteuert, um die zweite Betätigungskraft am Steuerkolben 12 zu erzeugen. Da diese Schnittstelle 13 bevorzugt an den Datenbus 122 angeschlossen ist, über welche nicht nur die Kommunikation mit der elektronischen Steuereinrichtung EBS-ECU der Betriebsbremseinrichtung 124 sondern auch mit elektronischen Steuereinrichtungen einer Anzahl von weiteren elektronischen Fahrzeugsystemen erfolgt, welche insbesondere wenigstens ein Fahrerassistenzsystem wie ACC beinhalten, kann das Bremsanforderungssignal von einem beliebigen System des Zugfahrzeugs automatisch generiert werden.
- 68: Lenkspindel
- 70: Autopiloteinrichtung
- 72: Lenkaktuator
- 74: Lenkradwinkelsensor
- 76: Lenkradmoment
- 78: Lenkgestänge
- 80a/b: Achsschenkel
- 82: Lenkmoment
- 84: Energieversorgungsleitung
- 86: Energieversorgungsleitung
- 88: Signalgeber
- 90: Signalleitung
- 92: Energieversorgungsleitung
- 94: Energieversorgungsleitung
- 96: Energieversorgungsleitung
- 104: Proportionalventil
- 106: 2/2-Wege-Magnetventil
- 108: 2/2-Wege-Magnetventil
- 110: 3/2-Wege-Magnetventil
- 112: 2/2-Wege-Magnetventil
- 114: Druckregelmodul
- 116: Druckregelmodul
- 118: Radbremszylinder
- 120: Radbremszylinder
- 122: Datenbus
- 124: Betriebsbremseinrichtung
- 126: erste Energiequelle
- 128: zweite Energiequelle
- 130: elektrischer Kanal
- 132: pneumatischer Vorderachskanal
- 134: pneumatischer Hinterachskanal

### Bezugszahlenliste

- 1: Betriebsbremsventileinrichtung
- 2: Gehäuse
- 4: Stößelkolben
- 5: Stößelkolbenstange
- 6: Stößelaufnahme
- 7: obere Steuerkolbenstange
- 8: Stößel
- 10: Betriebsbremsbetätigungsorgan
- 12: Steuerkolben
- 13: elektrischer Anschluss
- 14: Stößelkolben - Druckfeder
- 16: untere Steuerkolbenstange
- 22: Steuerkammer
- 24: Raddrehzahlsensor
- 26: Lenkeinrichtung
- 28: Kenkrad
- 30: Lenkgetriebe
- 32: Auslasssitz
- 34: Doppelsitzventil
- 36: Ventilkörper
- 38: Arbeitskammer
- 40: Entlüftungsanschluss
- 42: Anschluss Betriebsbremskreis
- 44: Bremsdruckleitung
- 45: Bremsdruckleitung
- 46: Steuerkolben - Druckfeder
- 48: Anschluss
- 50: Ausgangsanschluss
- 52: erste Magnetventileinrichtung
- 54: Eingangsanschluss
- 56: Vorratsdruckleitung
- 57: Vorratsdruckleitung
- 58: Vorratsanschluss
- 60: Vorratskammer
- 62: Ventilkörper - Druckfeder
- 64: Einlasssitz
- 66: Innenwandung
- 67: Wegsensor

## Patentansprüche

1. Elektrische Ausrüstung eines Fahrzeugs mit einer wenigstens teilweise elektrischen Brems- und Lenkeinrichtung beinhaltend
a) eine elektrischen oder elektro-mechanische Lenkeinrichtung (26) mit oder ohne durchgehende mechanische Verbindung zwischen einem Lenkrad (28) und einem Lenkgetriebe (30) sowie mit einer elektronischen Lenksteuereinrichtung und einem elektrischen Lenksteller (72), und
b) eine Betriebsbremseinrichtung (124), wobei
c) als Betriebsbremseinrichtung eine elektropneumatische Betriebsbremseinrichtung (124), ein elektronisches oder elektronisch bremsdruckgeregeltes Bremssystem (EBS) vorgesehen ist, welches eine elektropneumatische Betriebsbremsventileinrichtung (1), eine elektronische Bremssteuereinrichtung (EBS-ECU), elektropneumatische Modulatoren (114, 116) sowie pneumatische Radbremsaktuatoren (118, 120) beinhaltet, wobei die elektronische Bremssteuereinrichtung (EBS-ECU) die elektropneumatischen Modulatoren (114, 116) elektrisch steuert, um pneumatische Bremsdrücke oder Bremssteuerdrücke für die pneumatischen Radbremsaktuatoren (118, 120) radindividuell, achsindividuell oder seitenindividuell zu erzeugen, **dadurch gekennzeichnet, dass**
d) die elektropneumatische Betriebsbremsventileinrichtung (1) ein Betriebsbremsbetätigungsorgan (10) sowie innerhalb wenigstens eines elektrischen Betriebsbremskreises wenigstens einen elektrischen Kanal (130) mit wenigstens einem vom Betriebsbremsbetätigungsorgan (10) betätigbaren elektrischen Bremswertgeber (67) zum von einer Betätigung des Betriebsbremsbetätigungsorgans (10) abhängigen Aussteuern von Betätigungssignalen aufweist, sowie wenigstens eine die Betätigungssignale empfangende elektronische Auswerteeinrichtung (FBM-ECU), welche abhängig von den Betätigungssignalen Bremsanforderungssignale in die elektronische Bremssteuereinrichtung (EBS-ECU) einsteuert, sowie innerhalb wenigstens eines pneumatischen Betriebsbremskreises wenigstens einen pneumatischen Kanal (132, 134), bei welchem durch Betätigung des Betriebsbremsbetätigungsorgans (10) aufgrund einer Fahrerbremsanforderung wenigstens ein Steuerkolben (12) der Betriebsbremsventileinrichtung (1) mit einer ersten Betätigungskraft belastet wird und der Steuerkolben (12) wenigstens ein einen Einlasssitz (64) und einen Auslasssitz (32) beinhaltendes Doppelsitzventil (34) der Betriebsbremsventileinrichtung (1) direkt oder indirekt steuert, um pneumatische Bremsdrücke oder Bremssteuerdrücke für die pneumatischen Radbremsaktuatoren (118, 120) zu erzeugen, und wobei
e) die elektronische Auswerteeinrichtung (FBM-ECU) der elektropneumatischen Betriebsbremsventileinrichtung (1) beinhaltende Mittel (ECU, 52) zum Erzeugen einer zweiten Betätigungskraft unabhängig von einer Fahrerbremsanforderung vorgesehen sind, welche bei Vorliegen einer vom Fahrerwunsch unabhängigen Bremsanforderung in Bezug zur ersten Betätigungskraft gleichsinnig oder gegensinnig auf den wenigstens einen Steuerkolben (12) wirkt, und wobei
f) die elektropneumatische Betriebsbremseinrichtung (124) von einer ersten elektrischen Energiequelle (126) oder von einem ersten Energieversorgungskreis mit elektrischer Energie versorgt ist, welche oder welcher unabhängig von einer zweiten elektrischen Energiequelle (128) oder einem zweiten Energieversorgungskreis ist, welche oder welcher die elektropneumatische Betriebsbremsventileinrichtung (1) mit elektrischer Energie versorgt, wobei
g) die elektrische oder elektro-mechanische Lenkeinrichtung (26) von der zweiten elektrischen Energiequelle (128) oder von dem zweiten Energieversorgungskreis mit elektrischer Energie versorgt ist.

2. Elektrische Ausrüstung nach Anspruch 1, **dadurch gekennzeichnet, dass** gemäß einer ersten Variante der elektro-pneumatischen Betriebsbremseinrichtung (124) der Bremsdruck in den pneumatischen Radbremsaktuatoren (118, 120) des Fahrzeugs und gegebenenfalls in pneumatischen Radbremsaktuatoren eines Anhängers des Fahrzeugs nur bei einem Fehler im elektrischen Betriebsbremskreis und bei Betätigung des Betriebsbremsbetätigungsorgans (10) rein pneumatisch gesteuert bzw. geregelt wird, ansonsten stets elektrisch, oder dass gemäß einer zweiten Variante der elektro-pneumatischen Betriebsbremseinrichtung (124) der Bremsdruck in den pneumatischen Radbremsaktuatoren (118, 120) des Fahrzeugs und gegebenenfalls in pneumatischen Radbremsaktuatoren eines Anhängers des Fahrzeugs durch Betätigung des Betriebsbremsbetätigungsorgans (10) rein pneumatisch gesteuert wird, wobei zusätzlich eine Fahrdynamikregelung vorgesehen ist, welche nur bei Eintritt von kritischen Situationen durch Brems- oder Lenkbremseingriff elektrisch eingreift.

3. Elektrische Ausrüstung nach Anspruch 1 oder 2, **dadurch gekennzeichnet, dass** die elektro-pneumatische Betriebsbremseinrichtung (124) eine ESP-Funktion und/oder eine ABS-Funktion (Antiblockiersystem) in Kombination mit einer ASR-Funktion mit ASR-Ventilen an Vorder- und Hinterachse aufweist.

4. Elektrische Ausrüstung nach Anspruch 1 oder 2, **dadurch gekennzeichnet, dass** sie eine Autopiloteinrichtung (70) oder ein Fahrerassistenzsystem umfasst, welche oder welches ohne Zutun des Fahrers Lenk- und/oder Bremsanforderungssignale in die Lenkeinrichtung (26) und/oder in die Betriebsbremseinrichtung (124) einsteuert, wobei die Lenk- und/oder Bremsanforderungssignale insbesondere in Abhängigkeit von Fahrbetriebsbedingungen erzeugt werden.

5. Elektrische Ausrüstung nach Anspruch 4, **dadurch gekennzeichnet, dass** die ohne Zutun des Fahrers erzeugten Lenk- und/oder Bremsanforderungssignale der Autopiloteinrichtung (70) oder des Fahrerassistenzsystems in die Lenkeinrichtung (26) und in die elektro-pneumatische Betriebsbremseinrichtung (124) und/oder in die elektropneumatische Betriebsbremsventileinrichtung (1) eingesteuert werden.

6. Elektrische Ausrüstung nach Anspruch 5, **dadurch gekennzeichnet, dass** Steuergeräte der Autopiloteinrichtung (70), des Fahrerassistenzsystems, der Lenkeinrichtung (26), der elektro-pneumatischen Betriebsbremseinrichtung (124) und/oder der elektropneumatischen Betriebsbremsventileinrichtung (1) an einen Datenbus (122) angeschlossen sind.

7. Elektrische Ausrüstung nach Anspruch 5 oder 6, **dadurch gekennzeichnet, dass** die elektronische Bremssteuereinrichtung (EBS-ECU) der elektro-pneumatischen Betriebsbremseinrichtung (124) oder eine von dieser abweichende Elektronik ausgebildet ist, dass sie einen Ausfall oder Fehler in dem zweiten elektrischen Energieversorgungskreis, in der zweiten elektrischen Energiequelle (128) oder in der Lenkeinrichtung (26) erkennt, wobei dann die elektronische Bremssteuereinrichtung (EBS-ECU) oder die Elektronik die elektro-pneumatische Betriebsbremseinrichtung (124) ansteuert, damit diese eventuell von der Autopiloteinrichtung (70) oder dem Fahrerassistenzsystem ausgesteuerte Lenkanforderungssignale in Form von radindividuellen oder seitenindividuellen Bremseingriffen an den Radbremsaktuatoren (118, 120) umsetzt.

8. Elektrische Ausrüstung nach Anspruch 5 oder 6, **dadurch gekennzeichnet, dass** wenigstens ein von der ersten elektrischen Energiequelle (126) oder von dem ersten Energieversorgungskreis mit elektrischer Energie versorgter und vom Betriebsbremsbetätigungsorgan (10) betätigbarer, elektrischer Signalgeber (88) vorgesehen ist, welcher bei einer Betätigung des Betriebsbremsbetätigungsorgans (10) ein elektrisches Betätigungssignal in die elektronische Bremssteuereinrichtung (EBS-ECU) oder eine von dieser abweichende Elektronik einsteuert.

9. Elektrische Ausrüstung nach Anspruch 8, **dadurch gekennzeichnet, dass** der elektrische Signalgeber (88) in die elektropneumatische Betriebsbremsventileinrichtung (1) integriert ist und insbesondere durch einen elektrischen Schalter gebildet wird.

10. Elektrische Ausrüstung nach Anspruch 5, 6, 8 oder 9, **dadurch gekennzeichnet, dass** wenigstens ein von der ersten elektrischen Energiequelle (126) oder von dem ersten Energieversorgungskreis mit elektrischer Energie versorgter und vom pneumatischen Bremsdruck oder Bremssteuerdruck in dem wenigstens einen pneumatischen Betriebsbremssteuerkreis betätigbarer, elektrischer Signalgeber (88) vorgesehen ist, welcher bei einer Betätigung des Betriebsbremsbetätigungsorgans (10) ein elektrisches Betätigungssignal in die elektronische Bremssteuereinrichtung (EBS-ECU) oder eine von dieser abweichende Elektronik einsteuert.

11. Elektrische Ausrüstung nach Anspruch 10, **dadurch gekennzeichnet, dass** der elektrische Signalgeber (88) in die elektropneumatische Betriebsbremsventileinrichtung (1) integriert ist und insbesondere durch einen elektrischen Drucksensor gebildet wird.

12. Elektrische Ausrüstung nach einem der Ansprüche 8 bis 11, **dadurch gekennzeichnet, dass** die elektronische Bremssteuereinrichtung (EBS-ECU) oder die Elektronik ausgebildet ist, dass sie einen Ausfall oder Fehler in dem zweiten elektrischen Energieversorgungskreis, in der zweiten elektrischen Energiequelle (128) oder in der Lenkeinrichtung (26) erkennt und bei Erkennen eines solchen Fehlers und bei Vorliegen des Betätigungssignals von der Autopiloteinrichtung (70) oder dem Fahrerassistenzsystem eventuell ausgesteuerte Lenkanforderungssignale ignoriert und nicht umsetzt.

13. Elektrische Ausrüstung nach einem der Ansprüche 5 bis 12, **dadurch gekennzeichnet, dass** die elektronische Auswerteeinrichtung (FBM-ECU) der Betriebsbremsventileinrichtung (1) oder eine von dieser abweichende Elektronik ausgebildet ist, dass sie einen Ausfall oder einen Fehler in dem ersten elektrischen Energieversorgungskreis, in der ersten elektrischen Energiequelle (126) oder im elektrischen Betriebsbremskreis der elektropneumatischen Betriebsbremseinrichtung (124) erkennt, wobei dann die elektronische Auswerteeinrichtung (FBM-ECU) oder die Elektronik die Betriebsbremsventileinrichtung (1) ansteuert, damit diese die von der Autopiloteinrichtung (70) oder vom Fahrerassistenzsystem eventuell ausgesteuerte Bremsanforderungssignale in Form von Bremseingriffen an den Radbremsaktuatoren (118, 120) umsetzt.

14. Elektrische Ausrüstung nach einem der vorhergehenden Ansprüche, **dadurch gekennzeichnet, dass** die elektropneumatische Betriebsbremsventileinrichtung (1) zusätzlich von der ersten elektrischen Energiequelle (126) oder von dem ersten Energieversorgungskreis mit elektrischer Energie versorgt ist.

15. Elektrische Ausrüstung nach einem der vorhergehenden Ansprüche, **dadurch gekennzeichnet, dass** die Mittel (ECU, 52) zur Erzeugung der zweiten Betätigungskraft wenigstens einen elektrischen, elektrohydraulischen oder elektropneumatischen Aktuator (52) beinhalten.

16. Elektrische Ausrüstung nach Anspruch 15, **dadurch gekennzeichnet, dass** die Mittel (ECU, 52) zur Erzeugung der zweiten Betätigungskraft wenigstens eine elektro-pneumatische Magnetventileinrichtung (52) beinhalten, welche abhängig von den elektrischen Signalen zur Bildung der zweiten Betätigungskraft wenigstens einen pneumatischen Steuerdruck aussteuert, von welchem die zweite Betätigungskraft abhängig ist.

17. Elektrische Ausrüstung nach Anspruch 16, **dadurch gekennzeichnet, dass** der von der wenigstens einen Magnetventileinrichtung (52) ausgesteuerte Steuerdruck mittels einer Sensorik gemessen und durch Abgleich mit einem Sollwert in der elektronischen Steuereinrichtung (FBM-ECU) geregelt wird, wobei die Sensorik, die Magnetventileinrichtung (52) zusammen mit der elektronischen Steuereinrichtung (FBM-ECU) einen Steuerdruckregler zur Regelung des pneumatischen Steuerdrucks bilden.

18. Elektrische Ausrüstung nach Anspruch 16 oder 17, **dadurch gekennzeichnet, dass** der pneumatische Steuerdruck in wenigstens eine Steuerkammer (22) der elektropneumatischen Betriebsbremsventileinrichtung (1) einsteuerbar ist, welche von dem wenigstens einen Steuerkolben (12) begrenzt ist, wobei die Steuerkammer (22) derart angeordnet ist, dass sie bei Belüftung eine in Bezug zur ersten Betätigungskraft gleichsinnige oder gegensinnige zweite Betätigungskraft an dem wenigstens einen Steuerkolben (12) bewirkt.

19. Elektrische Ausrüstung nach einem der vorhergehenden Ansprüche, **dadurch gekennzeichnet, dass** die Lenkeinrichtung (26) eine insbesondere hydraulische Servounterstützung aufweist.

20. Fahrzeug mit einen elektrischen Ausrüstung nach einem der vorhergehenden Ansprüche.

## Claims

1. Piece of electric equipment of a vehicle having an at least partially electrical braking and steering device, containing
a) an electric or electro-mechanical steering device (26) with or without a continuous mechanical connection between a steering wheel (28) and a steering gear mechanism (30) as well as having an electronic steering control device and an electric steering actuator (72), and
b) a service brake device (124), wherein
c) an electropneumatic service brake device (124), an electronic or electronically brake-pressure-regulated brake system (EBS), is provided as a service brake device, which contains an electropneumatic service brake valve device (1), an electronic brake control device (EBS-ECU), electropneumatic modulators (114, 116) and pneumatic wheel brake actuators (118, 120), wherein the electronic brake control device (EBS-ECU) electrically controls the electropneumatic modulators (114, 116), in order to generate pneumatic brake pressures or brake control pressures for the pneumatic wheel brake actuators (118, 120) wheel-specifically, axle-specifically or side-specifically, **characterized in that**
d) the electropneumatic service brake valve device (1) has a service brake activation element (10) and, within at least one electric service brake circuit, at least one electrical channel (130) with at least one electric brake value generator (67) which can be activated by the service brake activation element (10) and has the purpose of outputting activation signals as a function of activation of the service brake activation element (10), and at least one electronic evaluation device (FBM-ECU) which receives the activation signals and inputs braking request signals into the electronic brake control device (EBS-ECU) as a function of the activation signals, and, within at least one pneumatic service brake circuit, at least one pneumatic channel (132, 134) in which, by activating the service brake activation element (10) on the basis of a driver's braking request, at least one control piston (12) of the service brake valve device (1) is loaded with a first activation force, and the control piston (12) directly or indirectly controls at least one double seat valve (34), containing an inlet seat (64) and an outlet seat (32), of the service brake valve device (1), in order to generate pneumatic brake pressures or brake control pressures for the pneumatic wheel brake actuators (118, 120), and wherein
e) means (ECU, 52) which contain the electronic evaluation device (FBM-ECU) of the electropneumatic service brake valve device (1) and have the purpose of generating a second activation force independently of a driver's braking request are provided, which means (ECU, 52) act on the at least one control piston (12) in the same direction as or in the opposite direction to the first activation force when a braking request which is independent of the driver's request is present, and wherein
f) the electropneumatic service brake device (124) is supplied with electrical energy by a first electrical energy source (126) or by a first energy supply circuit, which energy source (126) or energy supply circuit is independent of a second electrical energy source (128) or a second energy supply circuit which energy source (128) or energy supply circuit supplies the electropneumatic service brake valve device (1) with electrical energy, wherein
g) the electric or electro-mechanical steering device (26) is supplied with electrical energy by the second electrical energy source (128) or by the second energy supply circuit.

2. Electric equipment according to Claim 1, **characterized in that**, according to a first variant of the electropneumatic service brake device (124), the brake pressure in the pneumatic wheel brake actuators (118, 120) of the vehicle, and, if appropriate, in pneumatic wheel brake actuators of a trailer of the vehicle, is closed-loop or open-loop controlled purely pneumatically only in the event of a fault in the electric service brake circuit and in the event of activation of the service brake activation element (10), and otherwise is always closed-loop or open-loop controlled electrically, or **in that**, according to a second variant of the electropneumatic service brake device (124), the brake pressure in the pneumatic wheel brake actuators (118, 120) of the vehicle, and, if appropriate, in pneumatic wheel brake actuators of a trailer of the vehicle, is controlled purely pneumatically by activating the service brake activation element (10), wherein a vehicle movement dynamics controller is additionally provided which intervenes electrically by means of a braking intervention or steering braking intervention only when critical situations occur.

3. Electric equipment according to Claim 1 or 2, **characterized in that** the electropneumatic service brake device (124) has an ESP function and/or an ABS function (anti-lock brake system) in combination with a traction control function with traction control valves on the front and rear axles.

4. Electric equipment according to Claim 1 or 2, **characterized in that** said electric equipment comprises an autopilot device (70) or a driver assistance system which input, without the involvement of the driver, steering and/or braking request signals into the steering device (26) and/or into the service brake device (124), wherein the steering and/or braking request signals are generated, in particular, as a function of driving operation conditions.

5. Electric equipment according to Claim 4, **characterized in that** the steering and/or braking request signals of the autopilot device (70) or of the driver assistance system, which are generated without the involvement of the driver, are input into the steering device (26) and into the electropneumatic service brake device (124) and/or into the electropneumatic service brake valve device (1).

6. Electric equipment according to Claim 5, **characterized in that** control units of the autopilot device (70), of the driver assistance system, of the steering device (26), of the electropneumatic service brake device (124) and/or of the electropneumatic service brake valve device (1) are connected to a databus (122).

7. Electric equipment according to Claim 5 or 6, **characterized in that** the electronic brake control device (EBS-ECU) of the electropneumatic service brake device (124) or electronics which differ therefrom is/are embodied in such a way that it/they detect(s) a failure or fault in the second electric energy supply circuit, in the second electric energy source (128) or in the steering device (26), wherein the electronic brake control device (EBS-ECU) or the electronics then actuate the electropneumatic service brake device (124) in such a way that the latter implements steering request signals, possibly output by the autopilot device (70) or the driver assistance system, in the form of wheel-specific or side-specific braking interventions, at the wheel brake actuators (118, 120).

8. Electric equipment according to Claim 5 or 6, **characterized in that** at least one electric signal generator (88) is provided, which is supplied with electrical energy by the first electric energy source (126) or by the first energy supply circuit, can be activated by the service brake activation element (10) and, when the service brake activation element (10) is activated, inputs an electrical activation signal into the electronic brake control device (EBS-ECU) or electronics which differ therefrom.

9. Electric equipment according to Claim 8, **characterized in that** the electric signal generator (88) is integrated into the electropneumatic service brake valve device (1) and is formed, in particular, by an electric switch.

10. Electric equipment according to Claim 5, 6, 8 or 9, **characterized in that** at least one electric signal generator (88) is provided, which is supplied with electrical energy by the first electric energy source (126) or by the first energy supply circuit, can be activated by the pneumatic brake pressure or brake control pressure in the at least one pneumatic service brake control circuit and which, when the service brake activation element (10) is activated, inputs an electrical activation signal into the electronic brake control device (EBS-ECU) or electronics which differ therefrom.

11. Electric equipment according to Claim 10, **characterized in that** the electric signal generator (88) is integrated into the electropneumatic service brake valve device (1) and is formed, in particular, by an electric pressure sensor.

12. Electric equipment according to one of Claims 8 to 11, **characterized in that** the electronic brake control device (EBS-ECU) or the electronics is/are embodied in such a way that it/they detect(s) a failure or fault in the second electric energy supply circuit in the second electric energy source (128) or in the steering device (26), and steering request signals which are possibly output by the autopilot device (70) or the driver assistance system are ignored and not implemented when such a fault is detected and when the activation signal is present.

13. Electric equipment according to one of Claims 5 to 12, **characterized in that** the electronic evaluation device (FBM-ECU) of the service brake valve device (1) or electronics which differ therefrom is/are embodied in such a way that it/they detect(s) a failure or a fault in the first electric energy supply circuit, in the first electrical energy source (126) or in the electric service brake circuit of the electropneumatic service brake device (124), wherein the electronic evaluation device (FBM-ECU) or the electronics then actuates/actuate the service brake valve device (1) in such a way that the latter implements the braking request signals possibly output by the autopilot device (70) or by the driver assistance system in the form of braking interventions at the wheel brake actuators (118, 120).

14. Electric equipment according to one of the preceding claims, **characterized in that** the electropneumatic service brake valve device (1) is additionally supplied with electrical energy by the first electric energy source (126) or by the first energy supply circuit.

15. Electric equipment according to one of the preceding claims, **characterized in that** the means (ECU, 52) for generating the second activation force contain at least one electric, electro-hydraulic or electropneumatic actuator (52).

16. Electric equipment according to Claim 15, **characterized in that** the means (ECU, 52) for generating the second activation force contain at least one electropneumatic solenoid valve device (52) which outputs at least one pneumatic control pressure as a function of the electrical signals for forming the second activation force, on which pneumatic control pressure the second activation force is dependent.

17. Electric equipment according to Claim 16, **characterized in that** the control pressure which is output by the at least one solenoid valve device (52) is measured by means of a sensor system and is regulated by comparison with a setpoint value in the electronic control device (FBM-ECU), wherein the sensor system, the solenoid valve device (52) together with the electronic control device (FBM-ECU) form a control pressure regulator for regulating the pneumatic control pressure.

18. Electric equipment according to Claim 16 or 17, **characterized in that** the pneumatic control pressure can be input into at least one control chamber I (22) of the electropneumatic service brake valve device (1), which control chamber (22) is bounded by the at least one control piston (12), wherein the control chamber (22) is arranged in such a way that in the case of aeration it brings about a second activation force, in the same direction as or the opposite direction to the first activation force, on the at least one control piston (12).

19. Electric equipment according to one of the preceding claims, **characterized in that** the steering device (26) has an, in particular hydraulic, power steering system.

20. Vehicle having an electric equipment according to one of the preceding claims.

## Revendications

1. Equipement électrique d'un véhicule ayant un dispositif, au moins en partie, électrique de freinage et de direction, comportant
a) un dispositif (26) électrique ou électromécanique de direction avec ou sans liaison mécanique continue entre un volant (28) de direction et un renvoi (30) de direction, ainsi qu'avec un dispositif électronique de direction et un régleur (72) électrique de direction et
b) un dispositif (124) de frein de service, dans lequel
c) il est prévu comme dispositif de frein de service, un dispositif (124) électropneumatique de frein de service, un système (EBS) de frein électronique ou à pression de frein régulé électroniquement, qui comporte un dispositif (1) de soupape électropneumatique de frein de service, un dispositif (EBS-ECU) électronique de commande de frein, des modulateurs (114, 116) électropneumatiques, ainsi que des actionneurs (118, 120) pneumatiques de frein de roue, le dispositif (EBS-ECU) électronique de commande de frein commandant électriquement les modulateurs (114, 116) électropneumatiques pour produire, individuellement à une roue, individuellement à un essieu ou individuellement à un côté, des pressions de frein pneumatiques ou des pressions de commande de frein pour les actionneurs (118, 120) pneumatiques de frein de roue, **caractérisé en ce que**
d) le dispositif (1) électropneumatique de soupape de frein de service a un organe (10) d'actionnement de frein de service, ainsi qu'au sein d'au moins un circuit électrique de frein de service au moins un canal (130) électrique ayant au moins un indicateur (67) électrique de valeurs de frein pouvant être actionné par l'organe (10) d'actionnement de frein de service pour émettre des signaux d'actionnement en fonction d'un actionnement de l'organe (10) d'actionnement de frein de service, ainsi qu'au moins un dispositif (FBM-ECU) électronique d'exploitation qui reçoit les signaux d'actionnement et qui, en fonction des signaux d'actionnement, envoie des signaux de demande de freinage au dispositif (EBS-ECU) électronique de commande de frein, ainsi qu'au sein d'au moins un circuit pneumatique de frein de service au moins un canal (132, 134) pneumatique, pour lequel, par actionnement de l'organe (10) d'actionnement de frein de service, en raison d'une demande de freinage du conducteur, au moins un piston (12) de commande du dispositif (1) de soupape de frein de service est soumis à une première force d'actionnement et le piston (12) de commande commande directement ou indirectement au moins une soupape (34) à siège double, comportant un siège (64) d'entrée et un siège (32) de sortie, du dispositif (1) de soupape de frein de service pour produire des pressions de frein pneumatiques ou des pressions de commande de frein pour les actionneurs (118, 120) pneumatiques de frein de roue, et dans lequel
e) des moyens (ECU, 52) comportant le dispositif (FMB-ECU) électronique d'exploitation du dispositif (1) électropneumatique de soupape de frein de service sont prévus pour produire une deuxième force d'actionnement indépendamment d'une demande de freinage du conducteur, laquelle, en présence d'une demande de freinage indépendante du souhait du conducteur, agit, par rapport à la première force d'actionnement, dans le même sens ou dans le sens contraire sur le au moins un piston (12) de commande, et dans lequel
f) le dispositif (124) électropneumatique de frein de service est alimenté en énergie électrique par une première source (126) d'énergie électrique ou par un premier circuit d'alimentation en énergie, qui est indépendant d'une deuxième source (128) d'énergie électrique ou d'un deuxième circuit d'alimentation en énergie ou qui alimente en énergie électrique le dispositif (1) électropneumatique de soupape de frein de service, dans lequel
g) le dispositif (26) électrique ou électromécanique de direction est alimenté en énergie électrique par la deuxième source (128) d'énergie électrique ou par le deuxième circuit d'alimentation en énergie.

2. Equipement électrique suivant la revendication 1, **caractérisé en ce que**, suivant une première variante du dispositif (124) électropneumatique de frein de service, la pression de frein dans les actionneurs (118, 120) pneumatiques de frein de roue du véhicule et, le cas échéant, dans des actionneurs pneumatiques de frein de roue d'une remorque du véhicule n'est commandée ou régulée d'une manière purement pneumatique qu'en cas de défaut du circuit électrique de frein de service et d'actionnement de l'organe (10) d'actionnement du frein de service, sinon toujours électriquement, ou **en ce que**, suivant une deuxième variante du dispositif (124) électropneumatique de frein de service, la pression de frein dans les actionneurs (118, 120) pneumatiques de frein de roue et, le cas échéant, dans des actionneurs pneumatiques de frein de roue d'une remorque du véhicule est commandée purement pneumatiquement par actionnement de l'organe (10) d'actionnement de frein de service, dans lequel il est prévu, en outre, une régulation dynamique de marche, qui intervient électriquement par intervention de frein ou de direction, seulement s'il se produit des situations critiques.

3. Equipement électrique suivant la revendication 1 ou 2, **caractérisé en ce que** le dispositif (124) électropneumatique de frein de service a une fonction ESP et/ou une fonction ABS (système d'antiblocage) en combinaison avec une fonction ASR à soupape ASR aux essieux avant et arrière.

4. Equipement électrique suivant la revendication 1 ou 2, **caractérisée en ce qu'**il comprend un dispositif (70) d'autopilotage ou un système d'assistance à la conduite, qui, sans intervention du conducteur, envoie des signaux de demande de direction et/ou de freinage au dispositif (26) de direction et/ou au dispositif (124) de frein de service, les signaux de demande de direction et/ou de freinage étant produits notamment en fonction des conditions de marche.

5. Equipement électrique suivant la revendication 4, **caractérisé en ce que** les signaux, de demande de direction et/ou de freinage produit sans intervention du véhicule, du dispositif (70) d'autopilotage ou du système d'assistance à la conduite sont envoyés au dispositif (26) de direction et au dispositif électropneumatique de frein de serve et/ou au dispositif (1) électropneumatique de soupape de frein de service.

6. Equipement électrique suivant la revendication 5, **caractérisé en ce que** des appareils de commande du dispositif (70) d'autopilotage, du système d'assistance à la conduite, du dispositif (26) de direction, du dispositif (124) électropneumatique de frein de service et/ou du dispositif (1) électropneumatique de soupape de frein de service sont raccordés à un bus (122) de données.

7. Equipement électrique suivant la revendication 5 ou 6, **caractérisé en ce que** le dispositif (EBS-ECU) électronique de commande de frein du dispositif (124) électropneumatique de frein de service ou une électronique s'en distinguant est constitué de manière à détecter une défaillance ou un défaut dans le deuxième circuit électrique d'alimentation en énergie dans la deuxième source (128) d'énergie électrique ou dans le dispositif (26) de direction, dans lequel alors le dispositif (EBS-ECU) électronique de commande de frein ou l'électronique commande le dispositif (124) électropneumatique de frein de service, afin que celui-ci émette, sous la forme d'interventions de frein, individuelles à une roue ou individuelles à un côté, sur les actionneurs (118, 120) de frein de roue, des signaux de demande de direction émis éventuellement par le dispositif (70) d'autopilotage ou par le système d'assistance à la conduite.

8. Equipement électrique suivant la revendication 5 ou 6, **caractérisé en ce qu'**il est prévu au moins un donneur (88) électrique de signal, qui est alimenté en énergie électrique par la première source (126) d'énergie électrique ou par le premier circuit d'alimentation en énergie, qui peut être actionné par l'organe (10) d'actionnement du frein de service et qui, lorsque l'organe (10) d'actionnement du frein de service est actionné, envoie un signal électrique d'actionnement au dispositif (EBS-ECU) électronique de commande de frein ou à une électronique s'en distinguant.

9. Equipement électrique suivant la revendication 8, **caractérisé en ce que** le donneur (88) électrique de signal est intégré au dispositif (20) électropneumatique de soupape de frein de service et est formé notamment d'un interrupteur électrique.

10. Equipement électrique suivant la revendication 5, 6, 8 ou 9, **caractérisé en ce qu'**il est prévu au moins un donneur (88) électrique de signal, qui est alimenté en énergie électrique par la première source (126) d'énergie électrique ou par le premier circuit d'alimentation en énergie, qui peut être actionné par la pression de frein pneumatique ou par la pression de commande de frein dans le au moins un circuit de commande pneumatique de frein de service et qui, lorsque l'organe (10) d'actionnement de frein de service est actionné, envoie un signal électrique d'actionnement au dispositif (EBS-ECU) électronique de commande de frein ou à une électronique s'en distinguant.

11. Equipement électrique suivant la revendication 10, **caractérisé en ce que** le donneur (88) de signal électrique est intégré au dispositif (1) électropneumatique de soupape de frein de service et est formé notamment d'un capteur électrique de pression.

12. Equipement électrique suivant l'une des revendications 8 à 11, **caractérisé en ce que** le dispositif (EBS-EUC) électronique de commande de frein ou l'électronique est constitué de manière à détecter une défaillance ou un défaut dans le deuxième circuit électrique d'alimentation en énergie dans la deuxième source (128) d'énergie électrique ou dans le dispositif (26) de direction et, si un défaut de ce genre est détecté et en présence, du signal d'actionnement, à négliger et à ne pas transformer des signaux de demande de direction émis éventuellement par le dispositif (70) d'autopilotage ou par le système d'assistance à la conduite.

13. Equipement électrique suivant l'une des revendications 5 à 12, **caractérisé en ce que** le dispositif (FBM-ECU) électronique d'exploitation du dispositif (1) de soupape de frein de service ou une électronique s'en distinguant est constitué de manière à détecter une défaillance ou un défaut dans le premier circuit d'alimentation en énergie électrique ou dans la première source (26) d'énergie électrique ou dans le circuit électrique de frein de service du dispositif (24) électropneumatique de frein de service, dans lequel ensuite le dispositif (FBM-ECU) électronique d'exploitation ou l'électronique commande le dispositif (1) de soupape de frein de service, afin que celui mette sous la forme d'intervention de freinage sur les actionneurs (118, 120) de frein de roue les signaux de demande de freinage émis éventuellement par le dispositif (70) d'autopilotage ou par le système d'assistance à la conduite.

14. Equipement électrique suivant l'une des revendications précédentes, **caractérisé en ce que** le dispositif (1) électropneumatique de soupape de frein de service est alimenté en énergie électrique, en outre, par la première source (126) d'énergie électrique ou par le premier circuit d'alimentation en énergie.

15. Equipement électrique suivant l'une des revendications précédentes, **caractérisé, en ce que** les moyens (ECU, 52) de production de la deuxième force d'actionnement comportent au moins un actionneur (52) électrique, électrohydraulique ou électropneumatique.

16. Equipement électrique suivant la revendication 15, **caractérisé en ce que** les moyens (ECU, 52) de production de la deuxième force d'actionnement comportent au moins un dispositif (52) électropneumatique à électrovanne, qui, en fonction des signaux électriques, sort pour la formation de la deuxième force d'actionnement au moins une pression pneumatique de commande, dont dépend la deuxième force d'actionnement.

17. Equipement électrique suivant la revendication 16, **caractérisé en ce que** la pression de commande sortie par le au moins un dispositif (52) à électrovanne est mesurée au moyen d'un système de capteur et est régulée par égalisation à une valeur de consigne dans le dispositif (FBM-ECU) électronique de commande, le système de capteur, le dispositif (52) à électrovanne formant ensemble avec le dispositif (FBM-ECU) électronique de commande un régleur de pression de commande pour réguler la pression pneumatique de commande.

18. Equipement électrique suivant la revendication 16 ou 17, **caractérisé en ce que** la pression pneumatique de commande peut être envoyée dans au moins une chambre (22) de commande du dispositif (1) électropneumatique de soupape de frein de service, chambre qui est délimitée par le au moins un piston (12) de commande, la chambre (22) de commande étant disposée de manière à provoquer, lorsqu'elle est alimentée en air, sur le au moins un piston (12) de commande, une deuxième force d'actionnement de même sens que la première force d'actionnement ou de sens contraire.

19. Equipement électrique suivant l'une des revendications précédentes, **caractérisé en ce que** le dispositif (26) de direction a une servo-assistance, notamment hydraulique.

20. Véhicule ayant un équipement électrique suivant l'une des revendications précédentes.
